# EUROPEAN PATENT SPECIFICATION

(11) **EP 1 566 750 B1**
(45) Date of publication and mention of the grant of the patent: **16.04.2008**
(21) Application number: 05003403.2
(22) Date of filing: 17.02.2005
(51) Int. Cl.: G06F 17/30

(54) **Data processing unit and data processing program stored in computer readable medium**
Datenverarbeitungseinheit und Datenverarbeitungsprogramm gespeichert in einem computerlesbaren Aufzeichnungsmedium
Unité de traitement de données et programme de traitement de données stockée sur un support d'enregistrement lisible par ordinateur

(30) Priority: 20.02.2004 JP 2004043821
(43) Date of publication of application: 24.08.2005
(73) Proprietor: Brother Kogyo Kabushiki Kaisha, Nagoya-shi, Aichi-ken 467-8561 (JP)
(72) Inventor: Nose, Tetsuya, Technology Planning & IP Dept., Nagoya-shi Aichi-ken 467-8562 (JP); Tanaka, Motonori, Technology Planning & IP Dept., Nagoya-shi Aichi-ken 467-8562 (JP); Iwanaga, Kazuhiko, Technology Planning & IP Dept., Nagoya-shi Aichi-ken 467-8562 (JP); Fujita, Yasuyuki, Technology Planning & IP Dept., Nagoya-shi Aichi-ken 467-8562 (JP)
(74) Representative: Hofer, Dorothea

(56) References cited:
- WO-A-01/27712
- US-A- 6 040 832
- US-A- 6 154 738
- US-B1- 6 243 696
- US-B1- 6 687 711

## Description

The disclosure relates to a data processing unit for importing text data into a database and a data processing program stored in a computer readable medium.

Currently, there exist various kinds of software pieces for handling character strings (text data) on a computer and data passing between different software pieces has been carried out frequently. For example, personal address data is used for an address for mail created with word processing software, and the address data is also used for being printed on a post card and the like. Further, the address data may be transmitted by electronic mail. In this case, because the address data is stored in a file used by software in a format used by that software, when the address is used for other software, that address data needs to be exported/imported into a format readable by both software pieces or by activating both the software pieces, it is necessary to represent an address portion text so as to copy and paste it manually.

A method for using data without such a need of time and labor is disclosed in Japanese Patent Application Laid-Open Publication No. HEI 11-296512. According to the address processing unit and address processing method disclosed in the publication, inputted document data is analyzed for each line using a dictionary so as to determine a line attribute and a kind of the entire data is determined based on an aggregation of the line attribute. The data is then stored in a database of corresponding attributes.

However, according to the conventional unit and method, the volume of a dictionary becomes very large in order to intensify the accuracy for determination of the attribute because the dictionary is used for determining the attribute of data, thereby affecting processing speed and a processing unit having a low processing capacity is incapable of properly using this conventional method.

Document US-A-6040832 discloses a data processing unit that imports an inputted character string into a database, comprising: memorizing means for storing the database, displaying means for displaying the character string and selecting means for selecting a predetermined range of the character string displayed by the displaying means.

### SUMMARY OF THE INVENTION

Accordingly, this disclosure solves the above-described problems. An object of the invention is to provide a data processing unit capable of importing data having a simple structure and a data processing program stored in a computer readable medium.

To achieve the object, in a first aspect, there is provided a data processing unit that analyzes an inputted character string and imports components of the inputted character string into a database field corresponding to a kind of the inputted character string, comprising memorizing means for storing the database which includes plural fields and records; displaying means for displaying the character string; selecting means for selecting a predetermined range for the character string displayed by the displaying means; record allocating means for allocating a character string selected by the selecting means to the records; component dividing means for dividing a character string in a record allocated by the record allocating means into components; attribute determining means for determining the attribute of the components divided by dividing with the component dividing means; and storing means for storing the component in the database field corresponding to the attribute determined by the attribute determining means.

According to a second aspect, there is provided a data processing unit that analyzes an inputted character string and imports components of the inputted character string into a database field corresponding to a kind of the inputted character string, comprising memorizing means for storing the database which includes plural fields and records; displaying means for displaying the character string; selecting means for selecting a predetermined range for the character string displayed by the displaying means; attribute determining means for allocating a character string selected by the selecting means to a record according to a preliminarily set importing format, and dividing a character string allocated in the record into components so as to determine the attribute of the components obtained by the dividing; and storing means for storing the component in the database field corresponding to the attribute determined by the attribute determining means.

According to a third aspect, there is provided a data processing program stored in a computer readable medium that makes a computer analyze an inputted character string and execute data importing into a database field corresponding to a kind of the inputted character string, the data processing program comprising a memorizing process that memorizes plural fields and records in a storable database; a displaying process that displays the character string; a selecting process that selects a predetermined range for the character string displayed by the displaying process; a record allocating process that allocates a character string selected by the selecting process to the records; a component dividing process that divides a character string in a record allocated by the record allocating process into components; an attribute determining process that determines the attribute of the components obtained by dividing with the component dividing process; and a storing process that stores the component in a database field corresponding to the attribute determined by the attribute determining process.

According to a fourth aspect, there is provided a data processing program stored in a computer readable medium that makes a computer analyze an inputted character string and execute data importing into a database field corresponding to a kind of the inputted character string, the data processing program comprising a memorizing process that stores plural fields and records in a storable database; a displaying process that displays the character string; a selecting process that selects a predetermined range for the character string displayed by the displaying process; an attribute determining process that allocates a character string selected by the selecting process to a record according to a preliminarily set importing format, and divides a character string allocated in the record into components so as to determine the attribute of the components obtained by the dividing; and a storing process for storing the component in a database field corresponding to the attribute determined by the attribute determining process.

### BRIEF DESCRIPTION OF THE DRAWINGS

Embodiments of the invention will be described below in detail with reference to the accompanying drawings in which:

FIG. 1 is a block diagram showing an electric structure of a data processing unit;

FIG. 2 is a schematic diagram showing the structure of an address database;

FIG. 3 is a schematic diagram showing the structure of the RAM;

FIG. 4 is a flow chart of a main routine of the data processing unit according to a first embodiment;

FIG. 5 is a flow chart of subroutine for line head character string deletion processing to be carried out in S13 of FIG. 4;

FIG. 6 is an example of record allocation condition setting screen;

FIG. 7 is an example of a text data importing screen;

FIG. 8 is an example of an electronic mail importing screen;

FIG. 9 is an example of a screen displaying a result imported from text data into the address database;

FIG. 10 is a flow chart of a main routine according to a second embodiment;

FIG. 11 is a flow chart of subroutine for postal code confirmation processing to be executed in S47 of FIG. 10;

FIG. 12 is an example of a data importing screen from spreadsheet software;

FIG. 13 is an example of a screen displaying a result imported from the spreadsheet data into the address database;

FIG. 14 is a schematic diagram showing the structure of the RAM according to a third embodiment;

FIG. 15 is an image diagram showing a data example held in a format data buffer, a record data buffer, and an attribute data buffer of the RAM;

FIG. 16 is a flow chart of a main routine according to a third embodiment;

FIG. 17 is a flow chart of a subroutine for record allocation processing to be executed in S111 of FIG. 16;

FIG. 18 is a flow chart of a subroutine for attribute determining processing to be executed in S 115 of FIG. 16;

FIG. 19 is an example of an importing format setting screen;

FIG. 20 is a flow chart of a main routine according to a fourth embodiment; and

FIG. 21 is an example of the importing format setting screen.

### DETAILED DESCRIPTION OF EMBODIMENTS

The object of the invention is achieved with the features of the claims.

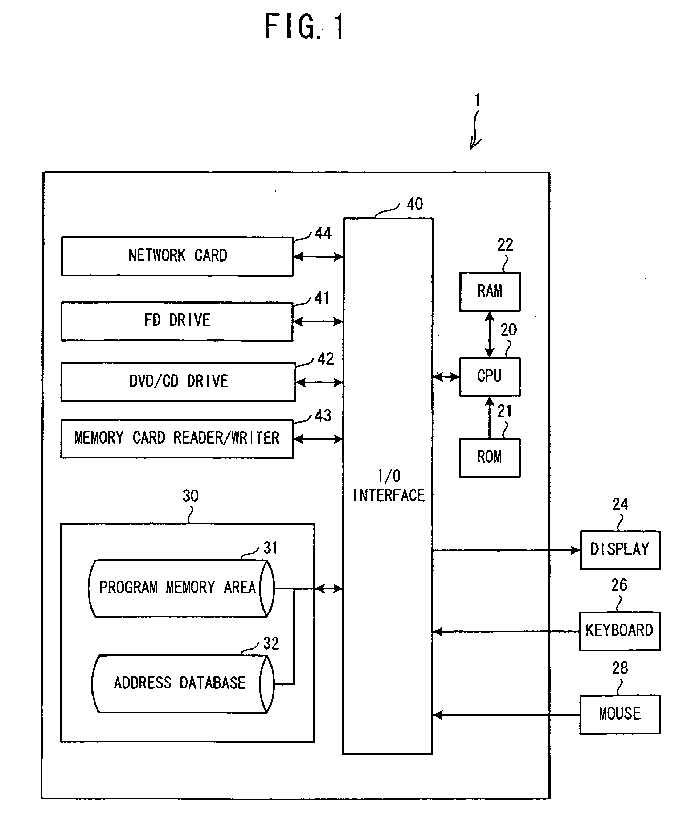

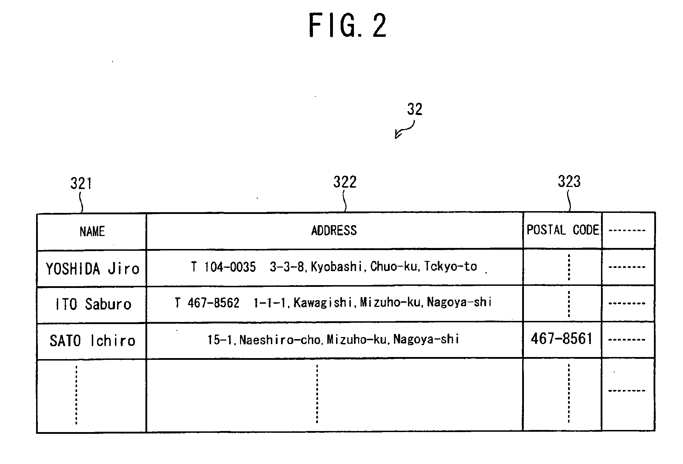

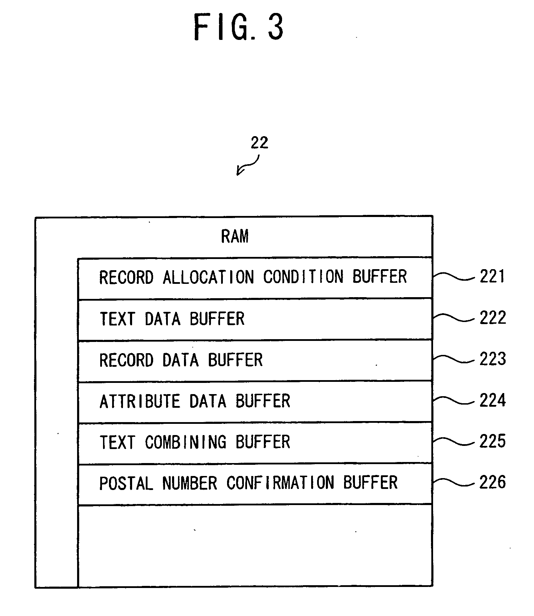

Next, the preferred embodiments will be described with reference to the accompanying drawings. First, a first embodiment of a data processing unit 1 using the data processing program will be described. This embodiment aims at importing data into an address database from software which handles text, such as word processing software and text editor. A imported result can be used from an address record software which handles an address database in the same manner as address data inputted by user manually. First, the structure of the data processing unit 1 will be described with reference to FIGS. 1-3. FIG. 1 is a block diagram showing the electrical structure of the data processing unit 1. FIG. 2 is a schematic diagram showing the structure of an address database 32. FIG. 3 is a schematic diagram showing the structure of the RAM 22.

As shown in FIG. 1, the data processing unit 1 is constituted of a well known personal computer, which includes a CPU 20 for controlling the data processing unit 1. A ROM 21, that stores BIOS and the like, a RAM 22 that stores various kinds of data temporarily, and an I/O interface 40 for exchanging data are connected to the CPU 20. All or some of display 24 which is a displaying means for displaying characters, images and the like, a keyboard 26 for inputting data through various kinds of keys, a mouse 28 for pointing at an arbitrary position on a screen, a hard disk unit 30, a FD drive 41, a DVD/CD drive 42, a memory card reader/writer 43 and a network card 44 are normally connected to the I/O interface 40. The hard disk unit 30 contains a program memory area 31 for storing programs to be executed in the CPU 20 and an address database 32. A program to be executed by the CPU 20 may be stored in computer readable media, such as ROM, CD-ROM, DVD-ROM, FD, memory card and the like and supplied to be read into the hard disk unit 30 of the data processing unit 1 or downloaded through a network to be read into the hard disk unit 30 of the data processing unit 1.

As shown in FIG. 2, the address database 32 is constituted of a name field 321, an address field 322, a postal code field 323, and other fields as appropriate. As for the name field 321, the address field 322, and the postal code field 323, data are stored in each field from text data by data processing which will be described later. In the meantime, data is not only automatically inputted but also can be inputted directly into the database by a user through software which handles the address database 32, for example, address record software.

Next, as shown in FIG. 3, the RAM 22 is constituted of a record allocation condition buffer 221 for recording a record allocation condition which specifies a range to be allocated to a single record from a selected character string, a text data buffer 222 for holding imported text data, a record data buffer 223 for holding data of each record produced by dividing imported text data, an attribute data buffer 224 for holding components produced by dividing a record corresponding to the attribute, a text combining buffer 225 which is an area used when combining components having the same attribute and a postal code confirmation buffer 226 which is an area used for confirming the postal code attribute. The RAM 22 additionally includes various kinds of work areas.

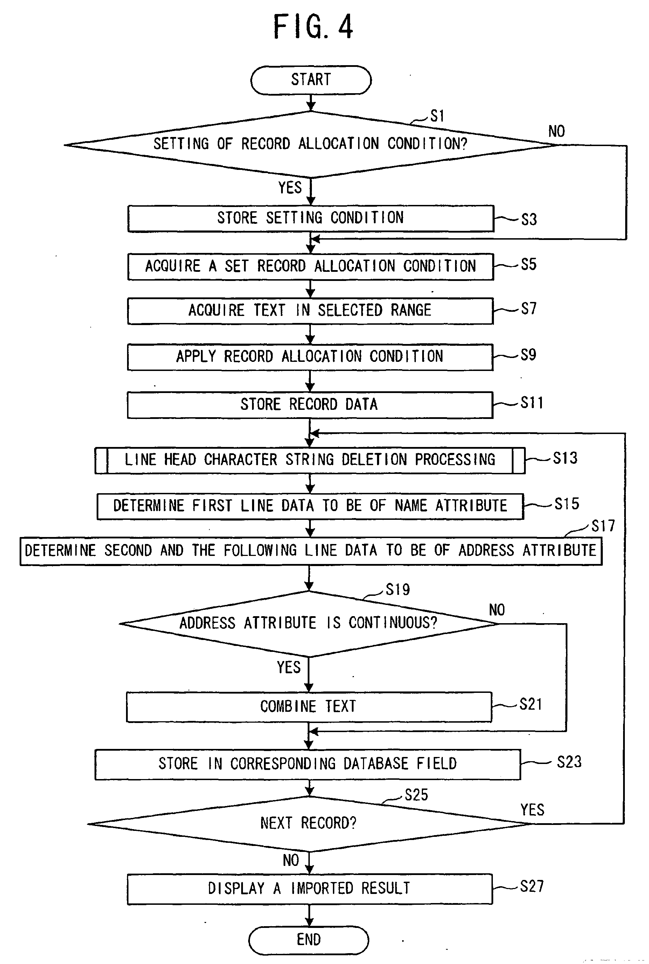

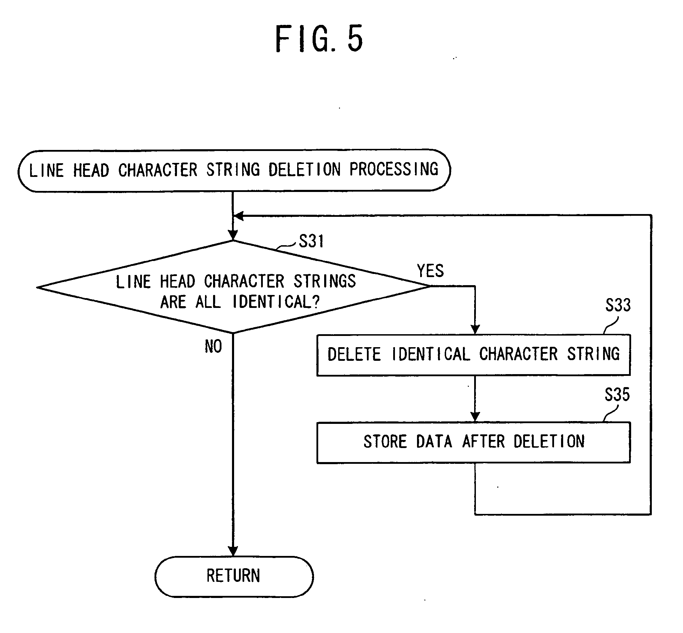

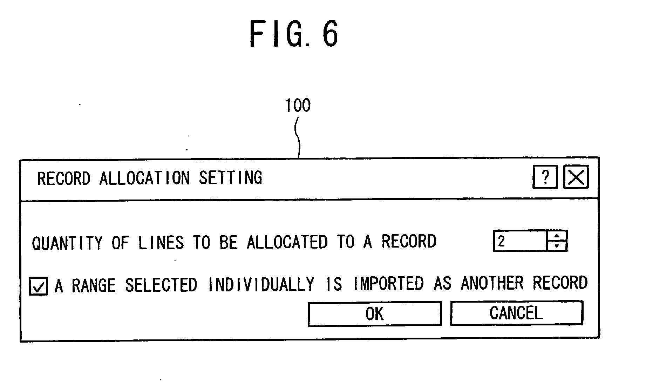

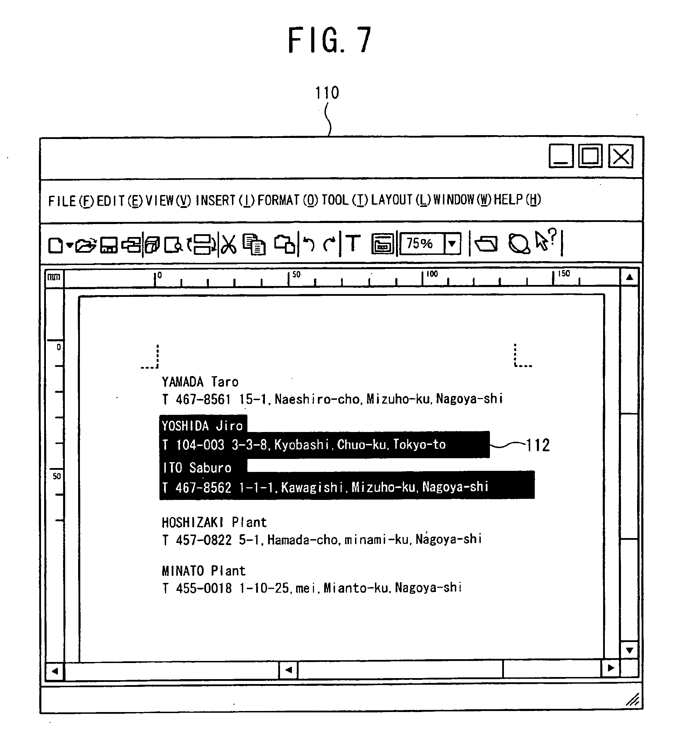

Next, the operation of the data processing unit 1 having such a structure will be described with reference to the flow charts of FIGS. 4 and 5 and the examples of display screens found in FIGS. 6-9. Hereinafter, an example of importing data from the word processing software into the address database 32 will be described. If user starts up a word processing software, a word processor window 110 is displayed on the display 24 as shown in FIG. 7. Here, the user newly inputs a character string or calls up an existing file so as to display a character string. Next, a character string of a portion which user wants to import is selected using the mouse 28 or the keyboard 26 and a selected range 112 is inverted /highlighted / marked. If an add-in button prepared in the word processor window 110 is clicked with this condition, the data processing program is started so that a processing of this embodiment, shown in FIG. 4, is started.

If the program is started, first, whether a record allocation condition is set is determined (S1). The setting of the record allocation condition can be carried out when a record allocation setting screen 100, as shown in FIG. 6, is displayed by right-clicking or the like during activation of the program. The record allocation condition sets how many lines of a selected text are to be imported as a single record. If a continuous range is selected, it is divided into records depending on the number of lines set in the record allocation condition. If it is specified to import an individually selected range as a separate record and the user selects plural places, the respective places are imported as a single record.

If it is intended to set up a record allocation condition (S1: YES), a set condition is stored in the record allocation condition buffer 221 in the RAM 22 (S3). If it is not intended to set a record allocation condition (S1: NO) or after the setting of the record allocation condition ends, processing of a selected text is executed. For that reason, first, a record allocation condition stored in the record allocation condition buffer 221 is acquired (S5). In the meantime, unless the user sets up a record allocation condition, a predetermined value is stored in the record allocation condition buffer 221. It is permissible to store a previously set importing format. For example, in the case of FIG. 6, "2" is set up as the number of allocation lines and it is assumed that this number is acquired from the record allocation condition buffer 221.

Next, text in the selected range is acquired and stored in the text data buffer 222 (S7). Then, the record allocation condition acquired in step S5 is applied to divide the selected text into records (S9). In the case of FIG. 7, the selected range 112 covers four lines. If "two lines" which is a record allocation condition set up previously is applied, a text of each two lines is handled as a single record.

Next, record data allocated in step S9 is stored in the record data buffer 223 (S 11). According to the former example, "YOSHIDA Jiro ... Tokyo-to" is stored as a first record and "ITO Saburo ... Nagoya-shi" is recorded as a second record.

Next, line head character string deletion processing occurs if all the line head characters of the records stored in the record data buffer 223 are identical, e.g., > or >>, determining that the character is a quotation mark used in an electronic mail, e.g., #, and deleting of the line head character string is carried out (S13). The detail of the line head character string deletion processing will be described with reference to FIG. 5.

Next, data on the first line of record data stored in the record data buffer 223 is determined to belong to name attribute (S15). According to this embodiment, data of each line separated by line feed code of record data stored in the record data buffer 223 is treated as a single component. Then, in this step, further, the attribute of the component constituted of data of the first line is automatically determined as a name attribute.

Next, the attribute of data on the second line and following is determined to belong to an address attribute (S17). Because, in the former example, the record data is constituted of two lines, only the second line is determined to be an address attribute and there are two components. If the number of record allocation lines is three or more, the second, the third, the fourth and so on are also regarded as the address attribute.

Next, whether the component of the address attribute is continuous is determined (S19). Because all the data attribute of the second line and following is determined to be an address attribute, if the number of record allocation lines is three or more, the components of the address attribute exist continuously. If the components of the address attribute are continuous (S19: YES), text data of the components are combined using the text combining buffer 225 (S21). Then, the combined text data is written over the attribute data buffer as the component of address attribute and stored therein, and the procedure proceeds to step S23.

If the address attribute is constituted of only one component (S 19: NO), the procedure proceeds to step S23. In S23, the attribute and the component are read out from the attribute data buffer 224 and stored in a field of corresponding address database 32. For example, in the former example, "YOSHIDA Jiro" is stored in the name field 321 and "T 104-0035 3-3-8, Kyobashi, Chuo-ku, Tokyo-to" is stored in the address field 322. The symbol "T" before the postal code 104-0035 is a Japanese postal code symbol.

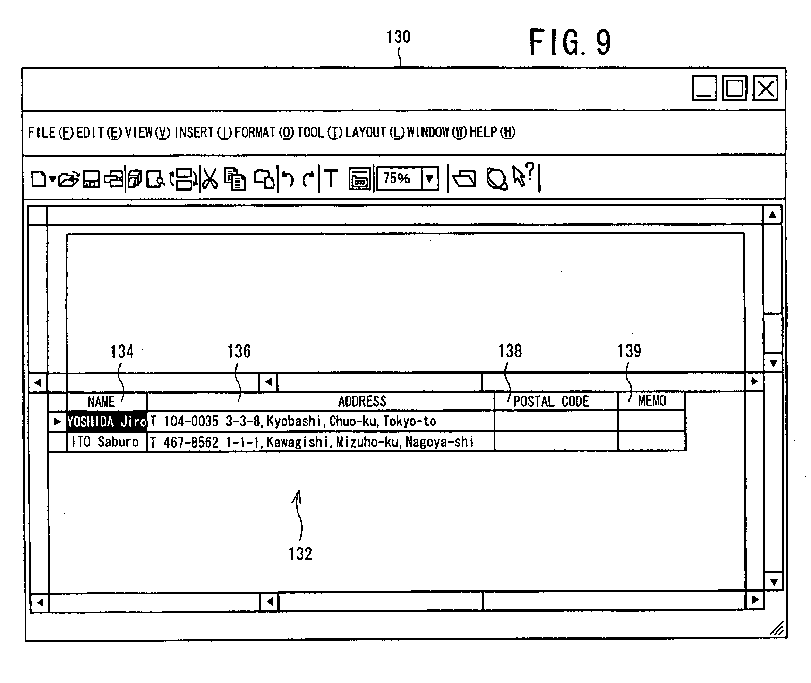

Next, whether an untreated next record exists in the record data buffer 223 is determined (S25). If there is a next record (S25: YES), the procedure returns to step S13, in which the attribute of each component is determined, until there are no more untreated records, and the processing for storing the attributes of each component in the appropriate database field is repeated. If there is no next record (S25: NO), the address record software is started and, as shown in FIG. 9, an importing result is displayed in an address database area 132 of an address record window 130 (S27). As shown in FIG. 9, a name field 134, an address field 136, a postal code field 138, and a memo field 139 are displayed in the address database area 132, indicating the result that text selected from a word processing software is stored in each field according to a determined attribute. Because the importing of the address data is completed in the above way, the data processing program ends. The user can execute the operation on the address record software continuously.

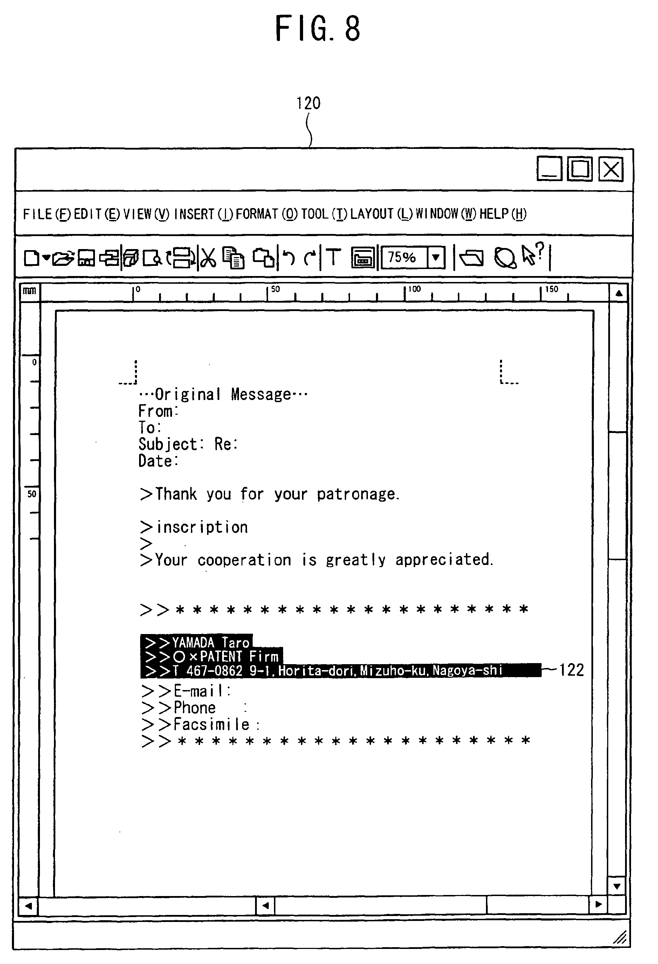

Next, the line head character string deletion processing to be executed in step S13 of FIG. 4 will be described with reference to FIG. 5. The line head character string deletion processing is a processing for deleting marks, such as ">", ">>", "#" and the like, attached to a line head, used particularly in electronic mail as shown in an electronic mail window 120 of FIG. 8 and importing data into database because these marks are irrelevant to the data content.

First whether all the line head character strings of respective lines in text data of a record stored in the record data buffer 223 are identical is determined (S31). For example, in text data in the record data buffer 223 acquired from the selected range 122 in FIG. 8, all its line head character strings are determined to be identical because the data on three lines begin with ">".

If all the line head character strings are identical (S31: YES), the identical character string is deleted (S33). In the former example, the first ">" of all the line heads are deleted. Then, after the deletion, the remaining data is stored in the record data buffer 223 (S35). Then, the procedure returns to step S31, in which whether all the line head character strings in the text data after the deletion are identical is again determined (S31). Although in the former example, in the data, the first ">" is deleted, another ">" still remains at the line head and thus, YES is determined in step S31 and the remaining ">" is deleted. By checking the character string at a line head repeatedly in this way, even if the quotation marks are attached repeatedly, all the line head character strings can be deleted. If it comes that the line head character strings are not identical (S31: NO), the procedure returns to the main routine in FIG. 4.

In the data processing unit 1 of this embodiment, if the user selects a text data inputted with word processing software or the like using a mouse or the like and starts an add-in program as described above, the attribute of each line is determined easily without any detailed setting and data is imported into a database of another software.

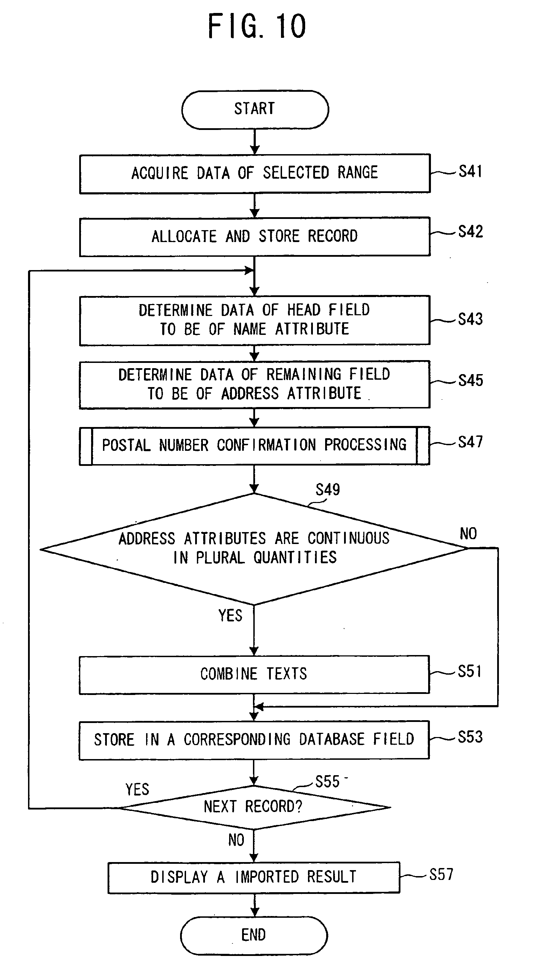

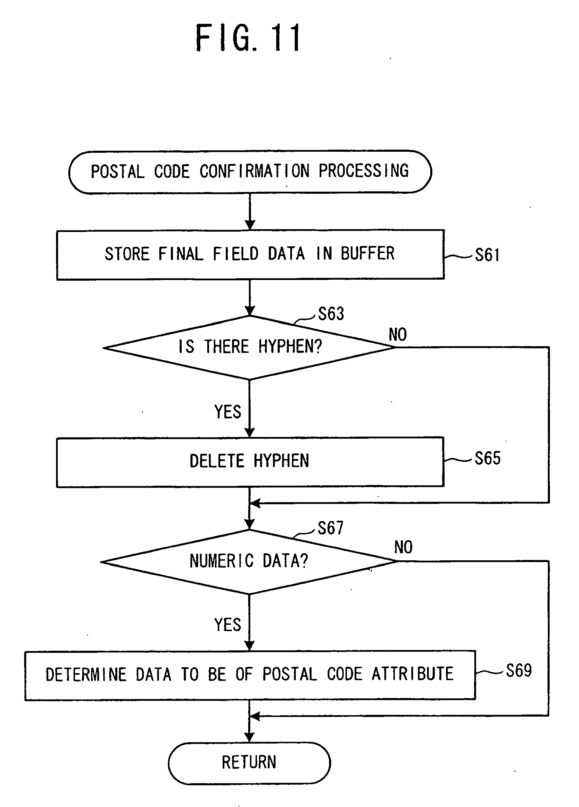

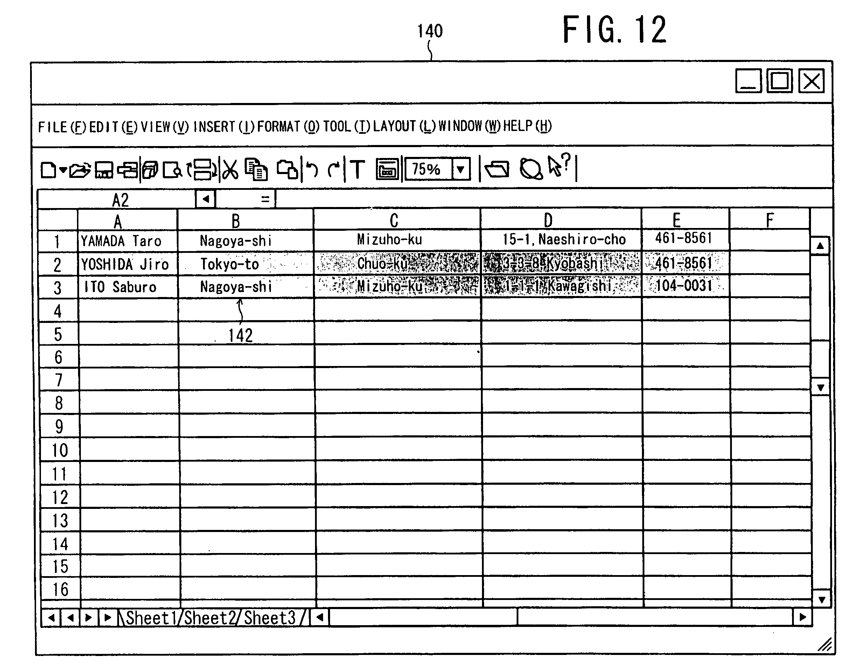

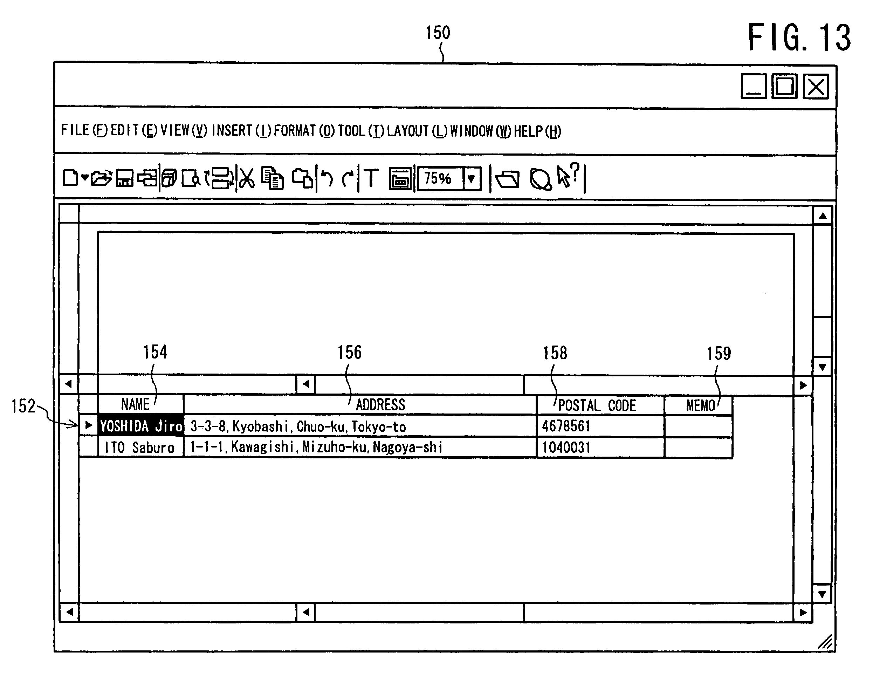

Next, a second embodiment will be described. According to the second embodiment, data is imported from spreadsheet software into the address database 32. Because the configuration of the second embodiment is identical to the first embodiment, FIGS. 1-3 and their descriptions are adopted. Hereinafter, the operation of the data processing unit 1 of the second embodiment will be described according to the flow charts of FIGS. 10 and 11 and examples of display screens in FIGS. 12 and 13.

Hereinafter, an example of importing data from a spreadsheet software will be described. When user starts a spreadsheet software, a spreadsheet program window 140 shown in FIG. 12 is started. The spreadsheet program window is constituted of individual cells specified by the column (field) and the row. The user newly inputs a character string into a cell or calls up an existing file to display a character string. In the example shown in FIG. 12, names are inputted in a column A of each row, an address is inputted in columns B-D and a postal code is inputted in column E. Here, the user selects a cell of a portion which he wants to import using the mouse 28 or the keyboard 26 and inverts a selected range 142. If user clicks the add-in button provided in the spreadsheet program window 140 with this condition, a data processing program is started so that the processing of this embodiment, as shown in FIG. 10, is started.

When the program is started, first, text data of the selected range is acquired corresponding to each field (S41), each record is allocated to records in the database and then, each record is stored in the record data buffer 223 (S42). Next, data processing is executed successively from the first record. First, data of a head field is determined as name attribute and stored in the attribute buffer 224 (S43). According to this embodiment, with a field of its original data as the component, its attribute is determined.

Next, all data of remaining fields are determined as address attribute and stored in the attribute data buffer 224 (S45). Then, the postal code confirmation processing for checking whether data of a final field is a postal code is executed (S47). The detail of the postal code confirmation processing will be described with reference to FIG. 11.

After the postal code confirmation processing ends, whether the attribute of the component stored in the attribute data buffer 224 is an address attribute, which is continuous in plural quantities, is determined (S49). If the address attribute is continuous (S49: YES), text data of the components are combined using the text combining buffer 225 (S51). Then, the combined text data is written over the attribute data buffer 224 as components of the address attribute and stored, and the procedure proceeds to step S53.

If there is only one component having the address attribute (S49: NO), the procedure proceeds to step S53. In step S53, an attribute and component are read out from the attribute data buffer 224 and stored in a field of a corresponding address database 32. For example, in case of Fig. 12, "YOSHIDA Jiro" is stored in the name field 321 and "3-3-8, Kyobashi, Chuo-ku, Tokyo-to 461-8561" is stored in the address field.

Next, whether an untreated next record exists in the record data buffer 223 is determined (S55). If there exists such a next record (S55: YES), the procedure returns to step S43, in which the attribute of each component is determined, until there are no more untreated records, and a processing for storing into a database field is repeated. When a next record no longer exists (S55: NO), the address record software is started and, as shown in FIG. 13, an imported result is displayed in an address database area 152 of an address record window 150 (S57). As shown in FIG. 13, a name field 154, an address field 156, a postal code field 158, and a memo field 159 are displayed in the address database area 152, indicating that a result that text selected from a spreadsheet software is stored in each field according to a determined attribute. Because the importing of the address data is completed in the above way, the data processing program ends. The user can execute the operation on the address record software continuously.

Next, the postal code confirmation processing to be executed in step S10 of FIG. 10 will be described with reference to FIG. 11. Although in the processing of FIG. 10, a first field is determined to be of a name attribute and remaining fields are determined to be of an address attribute and stored in each corresponding database field, if a last field of fields in a selected range is of numeric type, this is determined to be a postal code and stored in the postal code field.

Data in a last field of a record being processed stored in the record data buffer 223 is stored in the postal code confirmation buffer 226 (S61). Next, whether any hyphen is contained in stored data is determined (S63). Any postal code is constituted of numbers but there is an example in which a hyphen is inputted depending on a case. If the hyphen is found in the stored data, it cannot be determined to be of numeric type. Therefore, it is necessary to remove it preliminarily and this determination is carried out.

If a hyphen is found (S63: YES), the hyphen is deleted and the data is stored in the postal code confirmation buffer 226 (S65). Then, the procedure proceeds to step S67. If no hyphen is found (S63: NO), the procedure proceeds to step S67. In step S67, whether data stored in the postal code confirmation buffer 226 is numeric type is determined. If it is numeric type (S67: YES), data of the field is determined to belong to the postal code attribute and stored in the attribute data buffer 224 (S69). Then, the procedure returns to the main routine in FIG. 10. If it is not of numeric type (S67: NO), the procedure returns to the main routine in FIG. 10.

As described above, the data processing unit 1 of this embodiment is capable of easily importing into the address database the data stored in the type spreadsheet. Even if an address is stored in separate fields, they are combined and stored in the address field so that it does take no time and labor for arranging the sequence of fields.

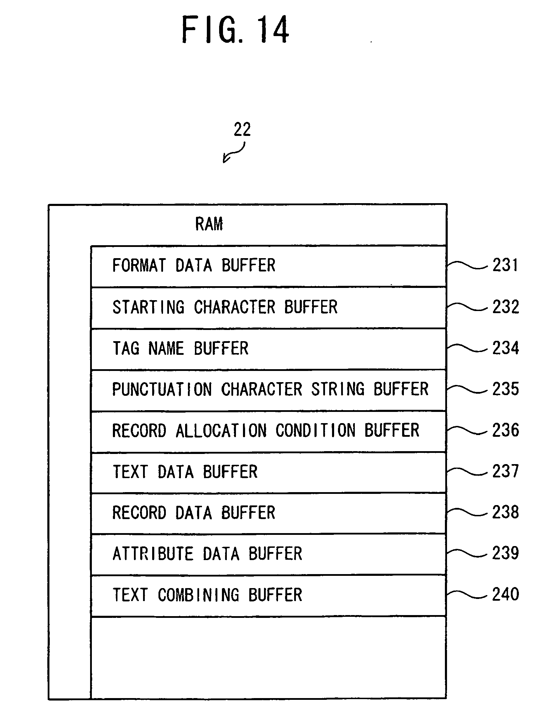

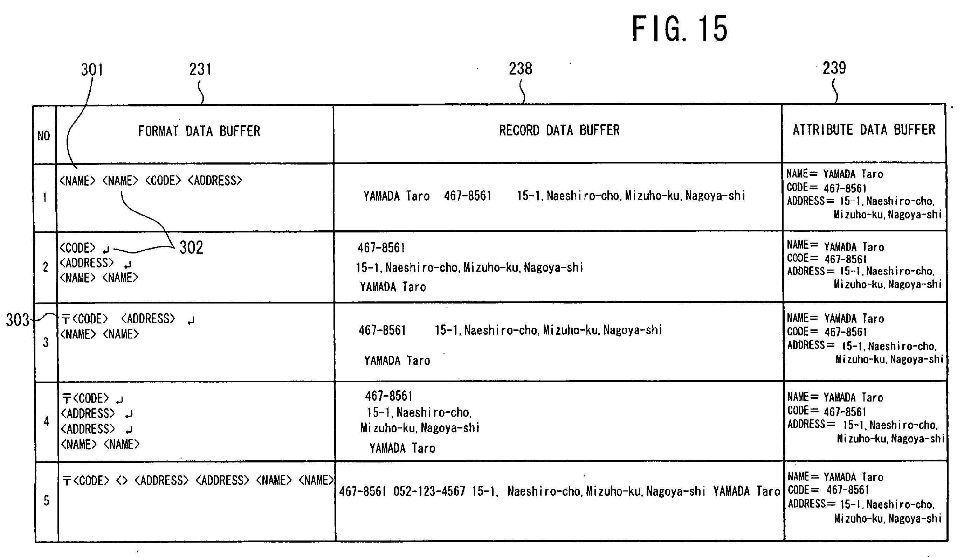

Next, a third embodiment will be described. According to the third embodiment, when importing from software handling text, such as word processing software and text editor, into the address database, an importing format is set up preliminarily and the importing is carried out according to that format. Because the configuration of the third embodiment is substantially identical to the first and second embodiments, FIGS. 1, 2 and the description thereof are employed and the structure of the RAM 22 will be described with reference to FIGS. 14 and 15. FIG. 14 is a schematic diagram showing the structure of the RAM 22. FIG. 15 is an image diagram showing a data example held in a format data buffer 231, a record data buffer 238 and an attribute data buffer 239 of RAM 22.

As shown in FIG. 14, the RAM 22 comprises a format data buffer 231 for holding an importing format, a starting character buffer 232 for holding a starting character indicating a start of importing in a selected range, a tag name buffer 234 for holding the name of a tag which is an importing format, a punctuation character string buffer 235 for holding a punctuation character string indicating a punctuation of the component, a record allocation condition buffer 236 for memorizing a record allocation condition which specifies how much range of a selected character string is to be allocated to a record, a text data buffer 237 for holding the imported text data, a record data buffer 238 for holding data of each record obtained by dividing an imported text data, an attribute data buffer 239 for holding components obtained by dividing a record in correspondence to its attributes, and a text combining buffer 240 which is an area used for combining components of the same attribute. In the RAM 22, various other kinds of work areas are prepared.

Next, examples of the importing format and imported data will be described with reference to FIG. 15. According to this embodiment, the importing format is set up with a tag 301 sandwiched between symbols "<", ">", a punctuation character 302 disposed between the tags and a starting character 303 indicating the head of an importing range. The tag 301 is specified in the format of, for example, <NAME> to indicate a name attribute, <CODE> to indicate a postal code attribute, <ADDRESS> to indicate an address attribute. Further, the punctuation character 302 is disposed between one tag and another and specified if an importing text is separated by specific character string, such as a space and a line feed code. The punctuation character string 302 may be a single character or a plurality of characters. According to this embodiment, text data existing between the punctuation character strings 302 is determined to be of the attribute of a tag name existing therebetween. Further, the starting character 303 excludes a character string existing before that string that appears from an importing object even if it is within the selected range. By specifying the starting character 303 preliminarily, if data desired to be imported is part of a selected range, the importing can be started just when that starting character appears.

For example, in example 1 in FIG. 15 the importing format is described on a single line in the format of <NAME> <NAME> <CODE> <ADDRESS> and stored in the format data buffer 231. This indicates that data separated with one space are arranged in the order of name attribute, postal code attribute and address attribute and a single record is constituted of a single line. Therefore, a record in the selected range is expressed as "YAMADA Taro 467-8561 15-1,Naeshiro-cho,Mizuho-ku,Nagoya-shi" as indicated in example 1 of the record data buffer 238. Then, if the import processing described later is executed, the name attribute (NAME) is determined to be "YAMADA Taro", the postal code attribute (CODE) is determined to be "467-8561" and the address attribute (ADDRESS) is determined to be "15-1,Naeshiro-cho,Mizuho-ku,Nagoya-shi" and stored in the attribute data buffer 239. Although a space which is the punctuation character string 302 exists in the address data, because there is no specification about the punctuation character string and component after the <ADDRESS> tag, this space is handled as not the punctuation character string 302 but as text data.

In example 2, the importing format is described in three lines, "<CODE> (line feed code)<ADDRESS> (line feed code)<NAME> <NAME>" and stored in the format data buffer 231. This indicates that data separated with the line feed codes are arranged in the order of postal code attribute, address attribute and name attribute and a single record is constituted of three lines. Therefore, the record of the selected range is expressed as "467-8561 (line feed code) 15-1,Naeshiro-cho,Mizuho-ku,Nagoya-shi (line feed code) YAMADA Taro" as indicated in the example 2 of the record data buffer 238. Then, if the importing processing described later is executed, the name attribute (NAME) is determined to be "YAMADA Taro", the postal code attribute (CODE) is determined to be "467-8561" and the address attribute (ADDRESS) is determined to be "15-1,Naeshiro-cho,Mizuho-ku,Nagoya-shi" and stored in the attribute data buffer 239.

In example 3, a Japanese postal code symbol "T" is described before the tag <CODE> in the importing format and stored in the format data buffer 231. This symbol "T" is the starting character 303. Then, this data is described in two lines, "<CODE> <ADDRESS> (line feed code) <NAME> <NAME>". On the first line, the data separated with a single space are arranged in the order of postal code attribute and the address attribute and data of the name attribute is disposed on the second line, indicating that a record is constituted of two lines. Therefore, the record of the selected range is expressed as "467-8561 15-1,Naeshirocho,Mizuho-ku,Nagoya-shi (line feed code) YAMADA Taro" as indicated in the example 3 of the record data buffer 238. Then, if the import processing described later is executed, the name attribute (NAME) is determined as "YAMADA Taro", the postal code attribute (CODE) is determined as "467-8561" and the address attribute (ADDRESS) is determined as "15-1,Naeshiro-cho,Mizuho-ku,Nagoya-shi" and stored in the attribute data buffer 239.

In example 4, the Japanese postal code symbol "T" which is the starting character 303 is described in front of the tag <CODE> in the importing format and stored in the format data buffer 231. Then, the data is described in four lines, "<CODE> (line feed code) <ADDRESS> (line feed code) <ADDRESS> (line feed code) <NAME> <NAME>". This indicates that data of the postal code attribute is disposed separately on a first line and data of the address attribute are disposed on a second line and a third line, and data of the name attribute is disposed on a fourth line, indicating that a single record is constituted of four lines. Thus, the record of the selected range is expressed as "467-8561(line feed code) 15-1,Naeshirocho,(line feed code) Mizuho-ku, Nagoya-shi (line feed code) YAMADA Taro" as indicated in the example 4 of the record data buffer 238. Then, when the import processing described later is executed, the name attribute (NAME) is determined to be "YAMADA Taro" and the postal code attribute (CODE) is determined to be "467-8561 ", the address attribute (ADDRESS) is determined to be "15-1,Naeshiro-cho,Mizuho-ku,Nagoya-shi" and stored in the attribute data buffer 239.

In the importing format of example 5, the Japanese postal code symbol "T" which is the starting character 303 is described before the tag <CODE> and "<CODE> <> <ADDRESS> <ADDRESS> <NAME> <NAME>" are described with a single line. An empty tag is described next to the tag <CODE>. This empty tag indicates an instruction that although data exists here, that data does not need to be imported to the attribute data buffer 239. Therefore, data separated with a space are arranged in the order of postal code attribute, unnecessary data, address attribute, address attribute, and name attribute, indicating that a record is constituted of a line. Thus, a record in the selected range is arranged as "467-8561 052-123-4567 15-1 Naeshiro-cho,Mizuho-ku,Nagoya-shi YAMADA Taro" as indicated in the example 5 of the record data buffer 238 in the order of postal code data, telephone number data, address data, name data. When the import processing described later is executed, the name attribute (NAME) is determined to be "YAMADA Taro", the postal code attribute (CODE) is determined to be "467-8561", the address attribute (ADDRESS) is determined to be "15-1 Naeshiro-cho,Mizuho-ku,Nagoya-shi" and then stored in the attribute data buffer 239. Then, the telephone number data, which is determined to be unnecessary, is not imported into the attribute data buffer 239.

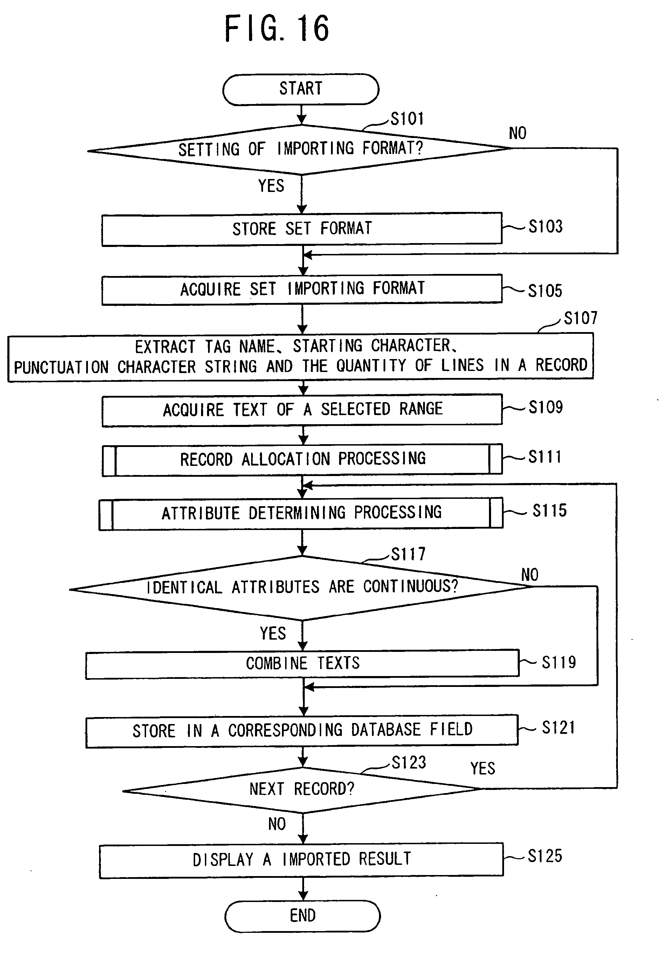

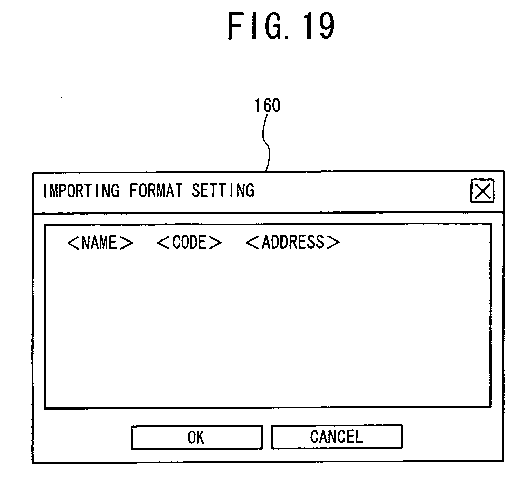

Next, the operation of the data processing unit 1 according to the third embodiment having such a structure will be described with reference to the flow charts of FIGS. 16-18 and the display screen of FIG. 19. Hereinafter, an example of importing data from a word processing software will be described. When the user starts a word processing software, the word processing program window 110 is represented on the display 24 as shown in FIG. 7 like the first embodiment. Here, the user newly inputs a character string or calls up an existing file so as to display a character string. Then, a character string of a portion which he wants to import is selected using the mouse 28 or the keyboard 26 and that selected range 112 is inverted. If the add-in button provided in the word processing program window 110 is clicked with this condition, the data processing program is started so that the processing of this embodiment, as shown in FIG. 16, is started.

If the program is started, whether an importing format is set up is determined (S101). When the right button of the mouse is clicked during activation of the program, an importing format setting screen 160, as shown in Fig. 19, is displayed so as to enable the setting of the importing format. The importing format aims at setting what attribute components are disposed in what order or style in a record scheduled to be imported and of how many lines a record is constituted. For example, a tag surrounded by "<" and ">" is used for the setting. According to this embodiment, the name of the tag indicates an attribute and a character string inputted between ">" and "<" indicates a punctuation character string inputted for punctuation of the components and the total number of the inputted importing formats indicates the number of components in a record.

If an importing format is set up (S101: YES), the display screen, as shown in FIG. 19, is presented on the display 24 and an inputted format is initially stored in the format data buffer 231 (S103). If no importing format is set up (S101: NO) or the setting of the importing format ends, an importing format stored in the format data buffer 231 is acquired to execute processing of the selected text (S105). If user does not set up an importing format, a default importing format, as initially stored in the format data buffer 231, is used. Next, a tag name, a starting character, a punctuation character string and the number of lines in a record are extracted from the importing format acquired from the format data buffer 231 (S107). The tag name extracted here is stored in the tag name buffer 234, the starting character is stored in the starting character buffer 232, the punctuation character string is stored in the punctuation character string buffer 235 and the number of lines in a record is stored in the record allocation condition buffer 236.

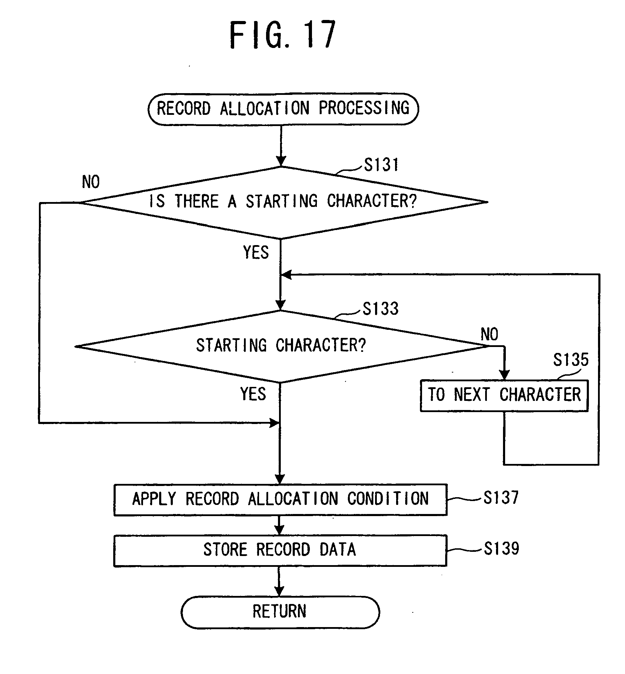

Next, text of a selected range is acquired and stored in the text data buffer 237 (S109). Then, by applying the record allocation condition extracted and stored in step S107, the record allocation processing for dividing the selected text into each record is executed (S111). The detail of the record allocation processing will be described with reference to FIG. 17.

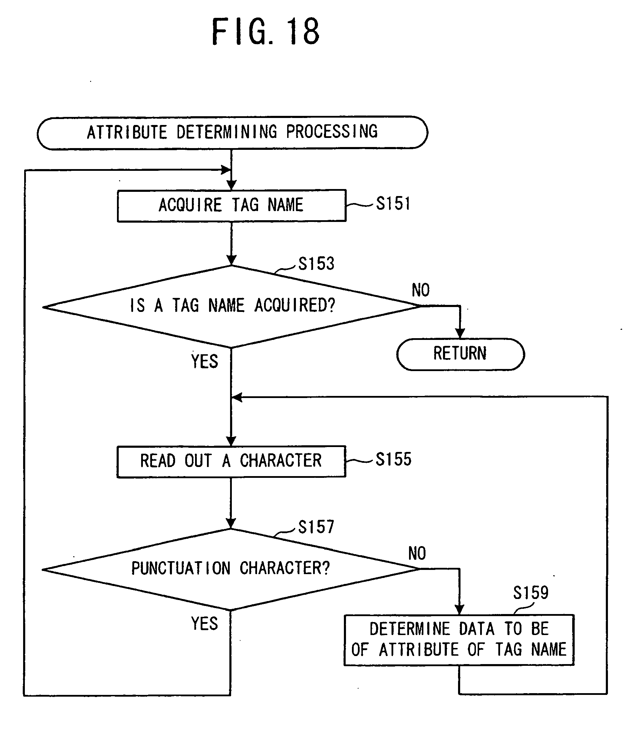

Next, the attribute determining processing for determining the attribute of each component in a record data stored in the record data buffer 238 is executed (S 115). The detail of the attribute determining processing will be described with reference to FIG. 18.

Then, whether components of an identical attribute are continuous is determined (S 117). If components of identical attribute are continuous (S 117: YES), text data of the components are combined with inserting space using the text combining buffer 225 (S119). Then, the combined text data is written over the attribute data buffer 239 as a single component and the procedure proceeds to step S121.

If there is only one component of the identical attribute (S117: NO), the procedure proceeds to step S121. In step S121, an attribute and component are read out from the attribute data buffer 239 and stored in a corresponding field in the address database 32.

Next, whether there is an untreated next record in the record data buffer 238 is determined (S123). If there is a next record (S123: YES), the procedure returns to step S 115, in which a processing of determining the attribute of each component and storing it into a field of database is repeated until no untreated record exists. Unless a next record exits (S123: NO), the address record software is started and an imported result is indicated on the display 24 (S125). Then, the data processing program ends.

Next, the record allocation processing to be executed in step S111 of FIG. 16 will be described with reference to FIG. 17. First, whether a starting character is stored in the starting character buffer 232 is determined (S131). If a starting character is stored (S 131: YES), whether a character is a starting character is checked successively from a head character of text in the selected range (S 133). Unless a character being processed is the starting character (S133: NO), the procedure proceeds to a next character (S135) and returns to step S133, in which it is determined whether that character is a starting character.

If the character being treated falls under a starting character (S 133: YES), selected text after the starting character is divided into record units by applying the record allocation condition stored in the record allocation condition buffer 236 because the text after that character is an importing object (S137). Then, allocated record data is stored in the record data buffer 238 (S139) and the procedure returns to the main routine of FIG. 16. On the other hand, unless a starting character is stored in the starting character buffer 232 (S 131: NO), the procedure proceeds to step S137, in which the allocation processing to a record is executed and, then, the procedure returns to the main routine of FIG. 16.

By specifying the starting character in this way, only necessary data can be imported without importing irrelevant data even if the user randomly selects text from before a text which he wants to import.

Next, the attribute determination processing to be executed in step S 115 of FIG. 16 will be described with reference to FIG. 18. First, a first tag name is acquired from the tag name buffer 234 (S151). Next, whether a tag name is acquired is determined (S153). Unless a tag name can be acquired (S 153: NO), the procedure returns to the main routine of FIG. 16 because processing on all the tag names is completed.

If a tag name is acquired (S153: YES), a processing for determining the attribute of each character is executed on a record being processed. First, a first character is read (S 155). Then, whether the read character is a punctuation character string stored in the character string buffer 235, such as a space or line feed code, is determined (S157). Unless the character string is a punctuation character string (S 157: NO), the attribute of the tag name acquired in step S151 is determined because that character is an importing object data and stored in the attribute data buffer 239 (S159). Then, the procedure returns to step S155, in which a next character is read and processing of that character is executed.

If the read character string is a punctuation character string (S157: YES), the procedure returns to step S 151, in which a next tag name is acquired, because attribute data up to here ends. Then, a processing of reading out a character one by one (S155), determining whether the read character is a punctuation character (S157) and determining the attribute (S 159) is repeated until a next tag name cannot be acquired (S 153: NO).

As described above, because, according to the data processing unit 1 of this embodiment, the import of data is executed after an importing format is preliminarily set up, if text is inputted according to a specific format, the user can specify the attribute of a component by allocating data to records using the tags. Thus, data can more appropriately be imported into the database.

Next, a fourth embodiment will be described. According to the fourth embodiment, when importing data from a spreadsheet program software and the like into the address database, an importing format is set up preliminarily and the import is executed according to that format. Because the configuration of the fourth embodiment is identical to the third embodiment, FIGS. 1, 2, 14 and 15 and the descriptions of those Figures will be employed.

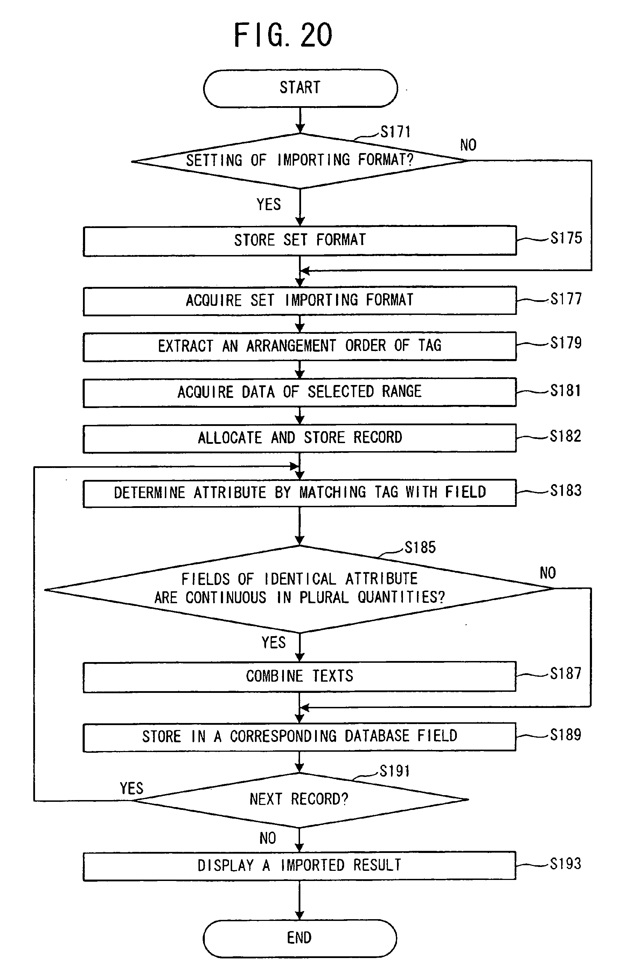

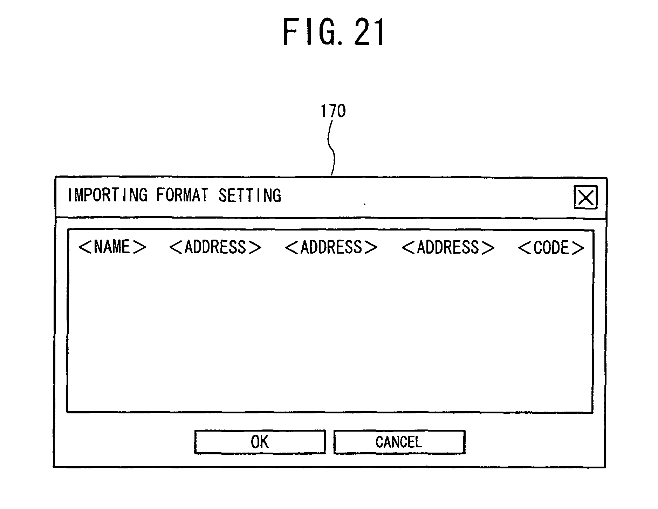

Next, the operation of the data processing unit 1 of the fourth embodiment will be described with reference to the flow chart of FIG. 20 and an example of the importing format setting screen of FIG. 21. Hereinafter, an example of data importing from the spreadsheet program software will be described. When user starts the spreadsheet program software, a spreadsheet program window 140 as shown in FIG. 12 is started like the second embodiment. The spreadsheet program window is constituted of individual cells specified by the column (field) and row. The user newly inputs a character string into a cell or calls up an existing file so as to represent a character string. Here, the user selects the cell of a portion which he wants to import using the mouse 28 or the keyboard 26 and inverts the selected range 142. If the user clicks the add-in button provided within the spreadsheet program window 140 in this state, the data processing program is started so that the processing of the embodiment is started.

If the program is started, first, whether it is intended to set up an importing format is determined (S171). Like the third embodiment, the setting of the importing format can be executed by operating the mouse by clicking the right button thereof or the like during activation of the program, while an importing format setting screen 170, as shown in FIG. 21, is presented.

If it is intended to set up an importing format (S 171: YES), a display screen, as shown in FIG. 21, is represented on the display 24 and an inputted format is stored in a format data buffer 231 (S 175). Because data is composed of fields in the case of the spreadsheet program software, the importing format sets up as what component this field is to be imported into. Because data is arranged in the order of "<NAME> <ADDRESS> <ADDRESS> <ADDRESS> <CODE>" in the example of FIG. 21, data is imported into the fields of the spreadsheet program software according to attributes in this order by the processing described later.

If it is not intended to set up an importing format (S 171: NO), or after the setting of the importing format ends, an importing format stored in the format data buffer 231 is acquired so as to execute processing of a selected text (S177). Then, the order of the tags is extracted from that importing format (S179). Unless the user sets up an importing format, a default importing format is stored in the format data buffer 231. Alternatively, an importing format set up previously may be stored as it is. Because data is inputted into each field in the case of a spreadsheet program software, matching this field with the order of arrangement of the tags set up according to the importing format determines an attribute so that data can be stored in the database.

Next, text data in the selected range is acquired corresponding to each field (S181) and by allocating respective records to records in the database, each record is stored in the record data buffer 238 (S 182). Then, the processing is executed successively from a first record. By matching the order of arrangement of tags extracted in step S 179 with the order of arrangement of fields of a processing object record, the attribute of each data in the record is determined (S 183). In the case of FIG. 12, for example, a name is inputted in a column A of each row, an address is inputted in columns B-D and a postal code is inputted in a column E. Because the importing format acquired from the format data buffer 231 is "<NAME> <ADDRESS> <ADDRESS> <ADDRESS> <CODE>", as shown in FIG. 21, column A is determined to be of the name attribute, columns B-D are determined to be of the address attribute and column E is determined to be of the postal code attribute. After the attribute is determined, it is stored in the attribute data buffer 239.

Next, whether a field (component) of an identical attribute is continuous is determined (S 185). If the components of an identical attribute are continuous (S 185: YES), text data of the components are combined using the text combining buffer 240 (S 187). Then, the combined text data is written over the attribute data buffer 239 as a single component and the procedure proceeds to step S 189.

If there is only a component having an identical attribute (S185: NO), the procedure proceeds to step S189. In step S189, the attribute and component are read out from the attribute data buffer 239 and stored in a field of a corresponding address database 32.

Next, whether there is an untreated next record in the record data buffer 238 is determined (S191). If there is a next record (S191: YES), the procedure returns to step S183, in which a processing of determining the attribute of each component and storing in a field of the database, until there are no untreated records, is repeated. Unless there is a next record (S191: NO), an imported result is represented on the display 24 (S193). Then, the data processing program ends.

As described above, because the data processing unit 1 of the fourth embodiment sets up an importing format preliminarily and then executes importing of data in case of spreadsheet program software in which data is inputted in a field format, the user can specify the attribute of a component appropriately so that importing of data can be achieved securely.

If, as described above, in the data processing unit, the user selects a portion which he/she wants to import of a displayed character string using a selecting means, a character string selected is allocated to a record by the record allocating means. Then, a character string allocated to a record is analyzed by a component dividing means and divided into components. Further, the attribute (for example, name, address, postal code and the like in the address database) of each component obtained by the dividing is determined and the component is stored in a database field corresponding to that attribute. Therefore, a database can be built-up easily by using already existing inputted text data without inputting any new character strings into the database.

If a character string composed of plural lines is selected, a single line is given to a single component and a character string of a first line is determined to be of the name attribute while character strings of a second and following lines are determined to be of address attribute. Because the attribute of a component is determined without the user's confirming the content of the component, the data can be imported into the address database easily. For example, this is particularly effective for a case where an inputted character string is arranged in the order of an address in English style.

If data divided with a field code is selected like spreadsheet data, each field is regarded as a single component and a first field is determined to be of the name attribute while all remaining fields are determined to be of the address attribute. Because the attribute of the component is determined without the user confirming the contents of the component, the data can be imported into the address database easily. This is particularly effective for the spreadsheet data because a name is often inputted into a first field in case of the spreadsheet.

If a final field is of numeric type when importing data from the spreadsheet data, it is regarded as a postal code and its attribute is determined. Thus, the postal code can be imported separately from the address when storing into the database.

If components obtained by dividing a character string have an identical attribute continuously (for example, name, address, address, address, postal code), the identical components are integrated to a single component when storing into a field. Thus, this embodiment can correspond to a case where the quantities of fields are different between an importing object and an import-into destination.

When plural ranges are also selected, it is possible to allocate them to a single record and execute import processing all at once.

By setting a specified character string as a record punctuation character string preliminarily, it is possible to allocate a range separated with that character string to a single record and execute the import processing all at once.

If the quantity of lines to be allocated to a single record is specified preliminarily, text data in which a character string of a specified format repeats every several lines can be imported effectively.

If an identical character string is inputted to a line head like, for example, a quotation mark, that character string is removed and the remaining data is allocated to a record. Thus, it is possible to automatically import only a necessary portion and store in the database.

Because, the data import is executed using a preliminarily set importing format, if text is inputted in a specified format, the user can specify the allocation of a record and the attribute of a component according to the importing format and import them into the database appropriately.

Further, because the attribute type and allocation of the component and the quantity of lines in a record are set up according to the importing format, data can be imported into the database more appropriately. Further, a set importing format can be reused.

Using the punctuation character string enables an importing format to be set up easily. Because the importing format is set up by sandwiching a character string indicating attribute information between specific symbols, the user can recognize the attribute clearly and set up the attribute easily. Further a component which does not have to be imported into the receiving program can be specified with a simple format and components having an identical attribute can be integrated into one without a user's consciousness.

When selecting a character string with a selecting means, it is possible to select it without being conscious of any character string which does not have to be imported into the receiving program.

Further, according to the data processing program stored in a computer readable medium of the disclosure, if the user selects a portion, which he/she wants to import, of a displayed character string with a selecting means, the selected character string is allocated to a record by the record allocating means. Then, a character string allocated to a single record is analyzed by a component dividing means and divided into components. Further, the attribute (for example, name, address, postal code and the like in the address database) of each component obtained by such dividing is determined and the component is stored in a database field corresponding to that attribute. Thus, the database can be built up easily using already existing inputted text data without newly inputting an additional character string for database.

## Claims

1. A data processing unit (1) that analyzes an inputted character string and imports components of the inputted character string into a database , comprising:
memorizing means (30) for storing the database (32) which includes plural fields (321, 322, 323) and records;
displaying means (24) for displaying the character string;
selecting means (26, 28) for selecting a predetermined range (112) of the character string displayed by the displaying means (30);
record allocating means (160, 221, 223, 236, 238, 20) for allocating a character string selected by the selecting means the records; **characterised in that**
said components are imported into a database field (321, 322, 323) corresponding to a kind of the inputted character string and the data processing unit (1) comprising:
component dividing means (224, 239, 20) for dividing a character string in a record allocated by the record allocating means into components;
attribute determining means (223, 238, 20) for determining the attribute of the components obtained by dividing with the component dividing means; and
storing means (224, 239, 20) for storing the component in the database field (321, 322, 323) corresponding to the attribute determined by the attribute determining means (223, 238, 20).

2. The data processing unit (1) according to claim 1, wherein the component dividing means (224, 239, 20) divides a single line punctuated by a line feed code from a character string allocated to the record into a component, and the attribute determining means (223, 238, 20) determines the component composed of a character string on a first line to be of a name attribute and the component composed of a second and following character string to be of an address attribute.

3. The data processing unit according to claim 1, wherein the component dividing means (224, 239, 20) divides the character string into components by a field code in the character string allocated to the record, and the attribute determining means (223, 238, 20) determines a first component to be of a name attribute and remaining components to be of an address attribute.

4. The data processing unit (1) according to claim 1 or 3, wherein the component dividing means (224, 239, 20) divides the character string into components by a field code in the character string allocated to the record, and the attribute determining means (223, 238, 20) for determining the component composed of character strings in a final field to be of a postal code attribute when the character string in the final field is numeric.

5. The data processing unit (1) acccording to one of claims 1 to 4, further comprising:
a component integrating means (225, 240, 20) for integrating plural components into a single component when the attribute determined by the attribute determining means (223, 238, 20) is identical to continuous plural components.

6. The data processing unit (1) according to one of claims 1 to 5, wherein the selecting means (26, 28) selects plural ranges (112), and the record allocating means (100, 221, 236, 238, 20) allocates each of plural ranges (112) selected by the selecting means (26, 28) to each record.

7. The data processing unit (1) according to one of claims 1 to 6, wherein the record allocating means (100, 221, 223, 236, 238, 20) allocates a range punctuated by a specific character string of the range (112) selected by the selecting means (26, 28) for a record.

8. The data processing unit (1) according to one of claims 1 to 6, wherein the record allocating means (100, 221, 223, 236, 238, 20) allocates a predetermined number of lines in a range (112) selected by the selecting means (26, 28) to a record.

9. The data processing unit (1) according to one of claims 1 to 8, further comprising:
a deleting means (20) for deleting character strings at line heads when the character strings of plural lines are selected by the selecting means (26,28) and the character strings at the line heads of the plural lines are identical.

10. The data processing unit (1) according to one of claims 1 to 9,
wherein the attribute determining means (223, 238, 20) allocates a character string selected by the selecting means (26, 28) to a record according to a preliminarily set importing format.

11. The data processing unit (1) according to claim 10, wherein the importing format contains the attribute type and allocation of a component in a record and the quantity of lines to be allocated to a record.

12. The data processing unit (1) according to claim 10 or 11, further comprising:
setting means (160, 170) for setting the importing format; and
format storing means (231) for storing an importing format set up by the setting means.

13. The data processing unit (1) according to one of claims 10 to 12, wherein the importing format contains a punctuation character string (302) for dividing a character string allocated to a record into components and attribute information for determining the attribute of a component punctuated by the punctuation character (302).

14. The data processing unit (1) according to claim 13, wherein the attribute information is composed of a character string (301) indicating an attribute sandwiched between specific symbols.

15. The data processing unit (1) according to claim 14, wherein it is indicated that a component corresponding to the attribute information need not be imported when the attribute information is composed of only the specific symbol.

16. The data processing unit according to one of claims 10 to 15, further comprising:
component integrating means (225, 240, 20) for integrating plural components determined to be of an identical attribute by the attribute determining means (223, 238, 20).

17. The data processing unit (1) according to one of claims 10 to 16, wherein the importing format contains a starting character (303) indicating the head of a range (112) to be imported.

18. A data processing program stored in a computer readable medium that makes a computer (1) analyze an inputted character string and execute data importing into a database field (321,322, 323) corresponding to a kind of the inputted character string, the data processing program comprising:
a memorizing process that memorizes plural fields and records in a storable database;
a displaying process that displays the character string;
a selecting process that selects a predetermined range (112) for the character string displayed by the displaying process;
a record allocating process that allocates a character string selected by the selecting process to the records;
a component dividing process that divides a character string in a record allocated by the record allocating process into components;
an attribute determining process that determines the attribute of the components obtained by dividing with the component dividing process; and
a storing process that stores the component in the database field (321, 322, 323) corresponding to the attribute determined by the attribute determining process.

19. The data processing program according to claim 18, wherein the component dividing process divides a single line punctuated by a line feed code from a character string allocated to the record into a component, and the attribute determining process determines the component composed of a character string on a first line to be of a name attribute and the component composed of a second and following character string to be of an address attribute.

20. The data processing program according to claim 18, wherein the component dividing process divides the character string into components by a field code in the character string allocated to the record, and
the attribute determining process determines a first component to be of a name attribute and remaining components to be of an address attribute.

21. The data processing program according to claim 18 or 20, wherein the component dividing process divides the character string into components by a field code in the character string allocated to the record and the attribute determining process that determines the component composed of character strings in a final field to be of a postal code attribute when the character string in the final field is numeric.

22. The data processing program according to one of claims 18 to 21, further comprising:
a component integrating process that integrates plural components to a single component when the attribute determined by the attribute determining process is identical to continuous plural components.

23. The data processing program according to one of claims 18 to 22, wherein the selecting process selects plural ranges (112), and the record allocating process allocates each of plural ranges (112) selected by the selecting process to each record.

24. The data processing program according to one of claims 18 to 23, wherein the record allocating process allocates a range (112) punctuated by a specific character string of the range selected by the selecting process to a record.

25. The data processing program according to one of claims 18 to 23, wherein the record allocating process allocates a predetermined number of lines in a range (112) selected by the selecting process to a record.

26. The data processing program according to one of claims 18 to 25, further comprising:
a deleting process that deletes character strings at line heads when the character strings of plural lines are selected by the selecting process and the character strings at the line heads of the plural lines are identical.

27. The data processing program according to one of claims 18 to 26, wherein
the attribute determining process allocates a character string selected by the selecting process to a record according to a preliminarily set importing format.

28. The data processing program according to claim 27, wherein the importing format contains the attribute type and allocation of a component in a record and the quantity of lines to be allocated to a record.

29. The data processing program according to claim 27 or 28, further comprising:
a setting process that sets the importing format; and
format storing process that stores an importing format set up by the setting process.

30. The data processing program according to one of claims 27 to 29, wherein the importing format contains a punctuation character string (302) for dividing a character string allocated to a record into components and attribute information for determining the attribute of a component punctuated by the punctuation character (302).

31. The data processing program according to claim 30, wherein the attribute information is composed of a character string (301) indicating an attribute sandwiched between specific symbols.

32. The data processing program according to claim 31, wherein it is indicated that a component corresponding to the attribute information need not be imported when the attribute information is composed of only the specific symbol.

33. The data processing program according to one of claims 27 to 32, further comprising:
a component integrating process that integrates plural components determined to be of an identical attribute by the attribute determining process.

34. The data processing program according to one of claims 27 to 33, wherein the importing format contains a starting character (303) indicating the head of a range to be imported.

## Patentansprüche

1. Eine Datenverarbeitungseinheit (1), die eine eingegebene Zeichenkette analysiert und Komponenten der eingegebenen Zeichenkette in eine Datenbank importiert, aufweisend:
Speichermittel (30) zum Speichern der Datenbank (32), die mehrere Felder (321, 322, 323) und Datensätze beinhaltet;
Anzeigemittel (24) zum Anzeigen der Zeichenkette;
Auswahlmittel (26, 28) zum Auswählen eines vorbestimmten Bereichs (112) der Zeichenkette, die durch das Anzeigemittel (30) angezeigt wird;
Datensatzzuweisungsmittel (100, 221, 223, 236, 238, 20) zum Zuweisen einer durch das Auswahlmittel ausgewählten Zeichenkette an die Datensätze;
**dadurch gekennzeichnet, daß**
die Komponenten in ein Datenbankfeld (321, 322, 323), das einer Art der eingegebenen Zeichenkette entspricht, importiert werden und die Datenverarbeitungseinheit (1) aufweist:
Komponentenunterteilungsmittel (224, 239, 20) zum Unterteilen einer Zeichenkette in einem durch das Datensatzzuweisungsmittel zugewiesenen Datensatz in Komponenten;
Attributbestimmungsmittel (223, 238, 20) zum Bestimmen des Attributs der Komponenten, die durch Unterteilen mit dem Komponentenunterteilungsmittel erhalten wurden; und
Speichermittel (224, 239, 20) zum Speichern der Komponente in das Datenbankfeld (321, 322, 323), das dem durch das Attributbestimmungsmittel (223, 238, 20) bestimmten Attribut entspricht.

2. Die Datenverarbeitungseinheit (1) gemäß Anspruch 1, wobei das Komponentenunterteilungsmittel (224, 239, 20) eine durch einen Zeilenumbruchcode punktierte einzelne-Zeile aus einer dem Datensatz zugewiesenen Zeichenkette in eine Komponente unterteilt, und das Attributbestimmungsmittel (223, 238, 20) bestimmt, daß die Komponente, die aus einer Zeichenkette einer ersten Zeile besteht, von einem Attribut Name ist und die Komponente, die aus einer zweiten und folgenden Zeichenkette besteht, von einem Attribut Adresse ist.

3. Die Datenverarbeitungseinheit gemäß Anspruch 1, wobei das Komponentenunterteilungsmittel (224, 239, 20) die Zeichenkette mittels eines Feldcodes in der Zeichenkette, die dem Datensatz zugewiesen ist, in Komponenten unterteilt, und das Attributbestimmungsmittel (223, 238, 20) bestimmt, daß eine erste Komponente von einem Attribut Name ist und die verbleibenden Komponenten von einem Attribut Adresse sind.

4. Die Datenverarbeitungseinheit (1) gemäß Anspruch 1 oder 3, wobei das Komponentenunterteilungsmittel (224, 239, 20) die Zeichenkette mittels eines Feldcodes in der Zeichenkette, die dem Datensatz zugewiesen ist, und des Attributbestimmungsmittels (223, 238, 20) zum Bestimmen, daß die aus einer Zeichenkette bestehende Komponente in einem letzten Feld von einem Attribut Postleitzahl ist, wenn die Zeichenkette in dem letzten Feld numerisch ist, in Komponenten unterteilt.

5. Die Datenverarbeitungseinheit (1) gemäß einem der Ansprüche 1 bis 4, ferner aufweisend:
ein Komponentenvereinigungsmittel (225, 240, 20) zum Vereinigen mehrerer Komponenten zu einer einzige Komponente, wenn das durch das Attributbestimmungsmittel (223, 238, 20) bestimmte Attribut bei aufeinanderfolgenden mehreren Komponenten identisch ist.

6. Die Datenverarbeitungseinheit (1) gemäß einem der Ansprüche 1 bis 5, wobei das Auswahlmittel (26, 28) mehrere Bereiche (112) auswählt, und das Datensatzzuweisungsmittel (100, 221, 223, 236, 238, 20) jeden der durch das Auswahlmittel (26, 28) ausgewählten mehreren Bereiche (112) jedem Datensatz zuweist.

7. Die Datenverarbeitungseinheit (1) gemäß einem der Ansprüche 1 bis 6, wobei das Datensatzzuweisungsmittel (100, 221, 223, 236, 238, 20) einen durch eine spezifische Zeichenkette punktierten Bereich des durch das Auswahlmittel (26, 28) ausgewählten Bereichs (112) einem Datensatz zuweist.

8. Die Datenverarbeitungseinheit (1) gemäß einem der Ansprüche 1 bis 6, wobei das Datensatzzuweisungsmittel (100, 221, 223, 236, 238, 20) eine vorbestimmte Anzahl Zeilen in einem durch das Auswahlmittel (26, 28) ausgewählten Bereich (112) einem Datensatz zuweist.

9. Die Datenverarbeitungseinheit (1) gemäß einem der Ansprüche 1 bis 8, ferner aufweisend:
ein Löschungsmittel (20) zum Löschen von Zeichenketten an Zeilenköpfen, wenn die Zeichenketten mehrerer Zeilen durch das Auswahlmittel (26, 28) ausgewählt wurden und die Zeichenketten an den Zeilenköpfen der mehreren Zeilen identisch sind.

10. Die Datenverarbeitungseinheit (1) gemäß einem der Ansprüche 1 bis 9,
wobei das Attributbestimmungsmittel (223, 238, 20) eine durch das Auswahlmittel (26, 28) ausgewählte Zeichenkette gemäß einem zuvor eingestellten Importformat einem Datensatz zuweist.

11. Die Datenverarbeitungseinheit (1) gemäß Anspruch 10, wobei das Importformat die Attributart und die Zuweisung einer Komponente in einem Datensatz und die einem Datensatz zuzuweisende Anzahl von Zeilen beinhaltet.

12. Die Datenverarbeitungseinheit (1) gemäß Anspruch 10 oder 11, ferner aufweisend:
Einstellungsmittel (100, 170) zum Einstellen des Importformats; und
Formatspeichermittel (231) zum Speichern eines Importformats, das durch das Einstellmittel eingestellt wurde.

13. Die Datenverarbeitungseinheit (1) gemäß einem der Ansprüche 10 bis 12, wobei das Importformat eine Punktierungszeichenkette (302) zum Unterteilen einer einem Datensatz zugewiesenen Zeichenkette in Komponenten und Attributinformation zum Bestimmen des Attributs einer durch das Punktierungszeichen (302) punktierten Komponente beinhaltet.

14. Die Datenverarbeitungseinheit (1) gemäß Anspruch 13, wobei die Attributinformation aus einer Zeichenkette (301) besteht, die ein Attribut, das zwischen spezifischen Symbolen liegt, anzeigt.

15. Die Datenverarbeitungseinheit (1) gemäß Anspruch 14, wobei angezeigt wird, daß eine Komponente, die einer Attributinformation entspricht, nicht importiert werden muß, wenn die Attributinformation nur aus dem spezifischen Symbol besteht.

16. Die Datenverarbeitungseinheit gemäß einem der Ansprüche 10 bis 15, ferner aufweisend:
ein Komponentenvereinigungsmittel (225, 240, 20) zum Vereinigen mehrerer Komponenten, bei denen durch das Attributbestimmungsmittel (233, 238, 20) bestimmt wurde, daß sie ein identisches Attribut haben.

17. Die Datenverarbeitungseinheit (1) gemäß einem der Ansprüche 10 bis 16, wobei das Importformat ein Anfangszeichen (303) beinhaltet, das den Kopf eines zu importierenden Bereichs (112) anzeigt.

18. Ein Datenverarbeitungsprogramm, das auf einem computerlesbaren Medium gespeichert ist und das einen Computer (1) dazu veranlasst, eine eingegebene Zeichenkette zu analysieren und einen Datenimport in ein Datenbankfeld (321, 322, 323), das einer Art der eingegebenen Zeichenkette entspricht, auszuführen, wobei das Datenverarbeitungsprogramm aufweist:
einen Speicherungsvorgang, der mehrere Felder und Datensätze in einer speicherbaren Datenbank speichert;
einen Anzeigevorgang, der die Zeichenkette anzeigt;
einen Auswahlvorgang, der einen vorbestimmten Bereich (112) für die Zeichenkette, die durch den Anzeigevorgang angezeigt wird, auswählt;
einen Datensatzzuweisungsvorgang, der eine durch den Auswahlvorgang ausgewählte Zeichenkette den Datensätzen zuweist;
einen Komponentenunterteilungsvorgang, der eine Zeichenkette in einem durch den Datensatzzuweisungsvorgang zugewiesenen Datensatz in Komponenten unterteilt;
einen Attributbestimmungsvorgang, der das Attribut der Komponenten bestimmt, die durch Unterteilen mit dem Komponentenunterteilungsvorgang erhalten wurden; und
einen Speichervorgang, der die Komponente in dem Datenbankfeld (321, 322, 323) speichert, das dem durch den Attributbestimmungsvorgang bestimmten Attribut entspricht.

19. Das Datenverarbeitungsprogramm gemäß Anspruch 18, wobei der Komponentenunterteilungsvorgang eine einzelne durch einen Zeilenumbruchscode punktierte Zeile einer dem Datensatz zugewiesenen Zeichenkette in eine Komponente unterteilt, und der Attributbestimmungsvorgang bestimmt, daß die Komponente, die aus einer Zeichenkette einer ersten Zeile besteht, von einem Attribut Name ist und die Komponente, die aus einer zweiten und folgenden Zeichenkette besteht, von einem Attribut Adresse ist.

20. Das Datenverarbeitungsprogramm gemäß Anspruch 18, wobei der Komponentenunterteilungsvorgang die Zeichenkette mittels eines Feldcodes in der dem Datensatz zugewiesenen Zeichenkette in Komponenten unterteilt und
der Attributbestimmungsvorgang bestimmt, daß eine erste Komponente von einem Attribut Name ist und die verbleibenden Komponenten von einem Attribut Adresse sind.

21. Das Datenverarbeitungsprogramm gemäß Anspruch 18 oder 20, wobei der Komponentenunterteilungsvorgang die Zeichenkette mittels eines Feldcodes in der dem Datensatz zugewiesenen Zeichenkette und des Attributbestimmungsvorgangs, der bestimmt, daß die Komponente, die aus einer Zeichenkette in dem letzten Feld besteht, von einem Attribut Postleitzahl ist, wenn die Zeichenkette in dem letzten Feld numerisch ist, in Komponenten unterteilt.

22. Das Datenverarbeitungsprogramm gemäß einem der Ansprüche 18 bis 21, ferner aufweisend:
einen Komponentenvereinigungsvorgang, der mehrere Komponenten zu einer einzigen Komponente vereinigt, wenn das durch den Attributbestimmungsvorgang bestimmte Attribut bei aufeinanderfolgenden mehreren Komponenten identisch ist.

23. Das Datenverarbeitungsprogramm gemäß einem der Ansprüche 18 bis 22, wobei der Auswahlvorgang mehrere Bereiche (112) auswählt und der Datensatzzuweisungsvorgang jeden der durch den Auswahlvorgang ausgewählten mehreren Bereiche (112) jedem Datensatz zuweist.

24. Das Datenverarbeitungsprogramm gemäß einem der Ansprüche 18 bis 23, wobei der Datensatzzuweisungsvorgang einen durch eine spezifische Zeichenkette punktierten Bereich (112) des durch den Auswahlvorgang ausgewählten Bereichs einem Datensatz zuweist.

25. Das Datenverarbeitungsprogramm gemäß einem der Ansprüche 18 bis 23, wobei der Datensatzzuweisungsvorgang eine vorbestimmte Anzahl Zeilen in einem durch den Auswahlvorgang ausgewählten Bereich (112) einem Datensatz zuweist.

26. Das Datenverarbeitungsprogramm gemäß einem der Ansprüche 18 bis 25, ferner aufweisend:
einen Löschungsvorgang, der Zeichenketten an Zeilenköpfen löscht, wenn die Zeichenketten mehrerer Zeilen durch den Auswahlvorgang ausgewählt wurden und die Zeichenketten an den Zeilenköpfen der mehreren Zeilen identisch sind.

27. Das Datenverarbeitungsprogramm gemäß einem der Ansprüche 18 bis 26, wobei
der Attributbestimmungsvorgang eine durch den Auswahlvorgang ausgewählte Zeichenkette gemäß einem zuvor eingestellten Importformat einem Datensatz zuweist.

28. Das Datenverarbeitungsprogramm gemäß Anspruch 27, wobei das Importformat die Attributart und die Zuweisung einer Komponente in einem Datensatz und die Anzahl der einem Datensatz zuzuweisenden Zeilen beinhaltet.

29. Das Datenverarbeitungsprogramm gemäß Anspruch 27 oder 28, ferner aufweisend:
einen Einstellungsvorgang, der das Importformat einstellt; und
einen Formatspeicherungsvorgang, der ein Importformat speichert, das durch den Einstellungsvorgang eingestellt wurde.

30. Das Datenverarbeitungsprogramm gemäß einem der Ansprüche 27 bis 29, wobei das Importformat eine Punktierungszeichenkette (302) zum Unterteilen einer einem Datensatz zugewiesenen Zeichenkette in Komponenten und Attributinformation zum Bestimmen des Attributs einer durch das Punktierungszeichen (302) punktierten Komponente beinhaltet.

31. Das Datenverarbeitungsprogramm gemäß Anspruch 30, wobei die Attributinformation aus einer Zeichenkette (301) besteht, die ein Attribut, das zwischen spezifischen Symbolen liegt, anzeigt.

32. Das Datenverarbeitungsprogramm gemäß Anspruch 31, wobei angezeigt wird, daß eine Komponente, die einer Attributinformation entspricht, nicht importiert werden muß, wenn die Attributinformation nur aus dem spezifischen Symbol besteht.

33. Das Datenverarbeitungsprogramm gemäß einem der Ansprüche 27 bis 32, ferner aufweisend:
einen Komponentenvereinigungsvorgang, der mehrere Komponenten vereinigt, bei denen durch den Attributbestimmungsvorgang bestimmt wurde, daß sie ein identisches Attribut haben.

34. Das Datenverarbeitungsprogramm gemäß einem der Ansprüche 27 bis 33, wobei das Importformat ein Anfangszeichen (303) beinhaltet, das den Kopf eines zu importierenden Bereichs anzeigt.

## Revendications

1. Unité de traitement de données (1) qui analyse une chaîne de caractères entrée et qui importe des composantes de la chaîne de caractères entrée dans une base de données, l'unité comprenant :
des moyens de mémorisation (30) pour enregistrer la base de données (32) qui comprend une pluralité de champs (321, 322, 323) et d'enregistrements ;
des moyens d'affichage (24) pour afficher la chaîne de caractères ;
des moyens de sélection (26, 28) pour sélectionner une plage prédéterminée (112) de la chaîne de caractères
affichée par les moyens d'affichage (30) ;
des moyens d'attribution d'enregistrement (100, 221, 223, 236, 238, 20) pour attribuer une chaîne de caractères sélectionnée par les moyens de sélection aux enregistrements ;
**caractérisée en ce que** lesdites composantes sont importées dans un champ (321, 322, 323) de base de données correspondant à un type de la chaîne de caractères entrée, et l'unité de traitement de données (1) comprenant :
des moyens de division en composantes (224, 239, 20) pour diviser une chaîne de caractères dans un enregistrement attribué par les moyens d'attribution d'enregistrement en des composantes ;
des moyens de détermination d'attribut (223, 238, 20) pour déterminer l'attribut des composantes obtenues par la division avec les moyens de division en composantes ; et
des moyens de stockage (224, 239, 20) pour stocker la composante dans le champ (321, 322, 323) de la base de données correspondant à l'attribut déterminé par les moyens de détermination d'attribut (223, 238, 20).

2. Unité de traitement de données (1) selon la revendication 1, dans laquelle les moyens de division en composantes (224, 239, 20) divisent une seule ligne ponctuée par un code de changement de ligne à partir d'une chaîne de caractères attribuée à l'enregistrement en une composante, et les moyens de détermination d'attribut (223, 238, 20) déterminent la composante composée d'une chaîne de caractères sur une première ligne comme étant un attribut de nom et la composante composée d'une deuxième chaîne de caractères - et suivantes - comme étant un attribut d'adresse.

3. Unité de traitement de données (1) selon la revendication 1, dans laquelle les moyens de division en composantes (224, 239, 20) divisent la chaîne de caractères en des composantes par un code de champ dans la chaîne de caractères attribuée à l'enregistrement, et les moyens de détermination d'attribut (223, 238, 20) déterminent une première composante comme étant un attribut de nom et les autres composantes comme étant un attribut d'adresse.

4. Unité de traitement de données (1) selon la revendication 1 ou 3, dans laquelle les moyens de division en composantes (224, 239, 20) divisent la chaîne de caractères en des composantes par un code de champ dans la chaîne de caractères attribuée à l'enregistrement, et les moyens de détermination d'attribut (223, 238, 20) pour déterminer la composante composée de chaînes de caractères dans un champ final comme étant un attribut de code postal quand la chaîne de caractères dans le champ final est numérique.

5. Unité de traitement de données (1) selon l'une quelconque des revendications 1 à 4, comprenant par ailleurs :
des moyens d'intégration de composantes (225, 240, 20) pour intégrer une pluralité de composantes en une seule composante quand l'attribut déterminé par lès moyens de détermination d'attribut (223, 238, 20) est identique pour une pluralité de composantes continues.

6. Unité de traitement de données (1) selon l'une quelconque des revendications 1 à 5, dans laquelle elle est moyen de sélection (26, 28) sélectionnent une pluralité de plages (112) et les moyens d'attribution d'enregistrement (100, 221, 223, 236, 238, 20) attribuent chacune de la pluralité de plages (112) sélectionnées par les moyens de sélection (26, 28) à chaque enregistrement.

7. Unité de traitement de données (1) selon l'une quelconque des revendications 1 à 6, dans laquelle les moyens d'attribution d'enregistrement (100, 221, 223, 236, 238, 20) attribuent une plage ponctuée par une chaîne de caractères spécifique de la plage (112) sélectionnée par les moyens de sélection (26, 28) à un enregistrement.

8. Unité de traitement de données (1) selon l'une quelconque des revendications 1 à 6, dans laquelle les moyens d'attribution d'enregistrement (100, 221, 223, 236, 238, 20) attribuent un nombre de lignes prédéterminé dans une plage (112) sélectionnée par les moyens de sélection (26, 28) à un enregistrement.

9. Unité de traitement de données (1) selon l'une quelconque des revendications 1 à 8, comprenant par ailleurs :
des moyens de suppression (20) pour supprimer des chaînes de caractères au niveau de têtes de lignes quand les chaînes de caractères d'une pluralité de lignes sont sélectionnées par les moyens de sélection (26, 28) et que les chaînes de caractères au niveau des têtes de lignes de la pluralité de lignes sont identiques.

10. Unité de traitement de données (1) selon l'une quelconque des revendications 1 à 9,
dans laquelle les moyens de détermination d'attribut (223, 238, 20) attribuent une chaîne de caractères sélectionnée par les moyens de sélection (26, 28) à un enregistrement conformément à un format d'importation défini au préalable.

11. Unité de traitement de données (1) selon la revendication 10, dans laquelle le format d'importation contient le type d'attribut et l'attribution d'une composante dans un enregistrement et la quantité de lignes à allouer à un enregistrement.

12. Unité de traitement de données (1) selon la revendication 10 ou 11, comprenant par ailleurs :
des moyens de définition (160, 170) pour définir le format d'importation ; et
des moyens de mémorisation de format (231) pour mémoriser un format d'importation défini par les moyens de définition.

13. Unité de traitement de données (1) selon l'une quelconque des revendications 10 à 12, dans laquelle le format d'importation contient une chaîne de caractères de ponctuation (302) pour diviser une chaîne de caractères attribuée à un enregistrement en des composantes, et des informations d'attribut pour déterminer l'attribut d'une composante ponctuée par le caractère de ponctuation (302).

14. Unité de traitement de données (1) selon la revendication 13, dans laquelle les informations d'attribut sont composées d'une chaîne de caractères (301) indiquant un attribut pris en sandwich entre des symboles spécifiques.

15. Unité de traitement de données (1) selon la revendication 14, dans laquelle il est indiqué qu'une composante correspondant aux informations d'attribut n'a pas besoin d'être importée quand les informations d'attribut sont composées du symbole spécifique uniquement.

16. Unité de traitement de données (1) selon l'une quelconque des revendications 10 à 15, comprenant par ailleurs :
des moyens d'intégration de composantes (225, 240, 20) pour intégrer une pluralité de composantes déterminées comme étant un attribut identique par les moyens de détermination d'attribut (223, 238, 20).

17. Unité de traitement de données (1) selon l'une quelconque des revendications 10 à 16, dans laquelle le format d'importation contient un caractère de début (303) indiquant le début d'une plage (112) à importer.

18. Programme de traitement de données enregistré sur un support lisible par un ordinateur qui amène un ordinateur à : (1) analyser une chaîne de caractères entrée et à exécuter une importation de données dans un champ (321, 322, 323) de base de données correspondant à un type de la chaîne de caractères entrée, le programme de traitement de données comprenant :
une opération de mémorisation qui mémorise une pluralité de champs et d'enregistrements dans une base de données mémorisable ;
une opération d'affichage qui affiche la chaîne de caractères ;
une opération de sélection qui sélectionne une plage prédéterminée (112) pour la chaîne de caractères affichée par l'opération d'affichage ;
une opération d'attribution d'enregistrement qui attribue une chaîne de caractères sélectionnée par l'opération de sélection aux enregistrements ;
une opération de division en composantes qui divise une chaîne de caractères dans un enregistrement attribué par les moyens d'attribution d'enregistrement en des composantes ;
une opération de détermination d'attribut qui détermine l'attribut des composantes obtenues par la division avec l'opération de division en composantes ; et
une opération de stockage qui stocke la composante dans le champ (321, 322, 323) de la base de données correspondant à l'attribut déterminé par l'opération de détermination d'attribut.

19. Programme de traitement de données selon la revendication 18, dans lequel l'opération de division en composantes divise une seule ligne ponctuée par un code de changement de ligne à partir d'une chaîne de caractères attribuée à l'enregistrement en une composante, et l'opération de détermination d'attribut détermine la composante composée d'une chaîne de caractères sur une première ligne comme étant un attribut de nom et la composante composée d'une deuxième chaîne de caractères - et suivantes - comme étant un attribut d'adresse.

20. Programme de traitement de données selon la revendication 18, dans lequel l'opération de division en composantes divise la chaîne de caractères en des composantes par un code de champ dans la chaîne de caractères attribué à l'enregistrement, et
l'opération de détermination d'attribut détermine une première composante comme étant une composante de nom et les autres composantes comme étant un attribut d'adresse.

21. Programme de traitement de données selon la revendication 18 ou 20, dans lequel l'opération de division en composantes divise la chaîne de caractères en des composantes par un code de champ dans la chaîne de caractères attribuée à l'enregistrement, et l'opération de détermination d'attribut qui détermine la composante composée de chaînes de caractères dans un champ final comme étant un attribut de code postal quand la chaîne de caractères dans le champ final est numérique.

22. Programme de traitement de données selon l'une quelconque des revendications 18 à 21, comprenant par ailleurs :
une opération d'intégration de composantes qui intègre une pluralité de composantes en une seule composante quand l'attribut déterminé par l'opération de détermination d'attribut est identique pour une pluralité de composantes continues.

23. Programme de traitement de données selon l'une quelconque des revendications 18 à 22, dans lequel l'opération de sélection sélectionne une pluralité de plages (112) et l'opération d'attribution d'enregistrement attribue chacune de la pluralité de plages (112) sélectionnées par l'opération de sélection à chaque enregistrement.

24. Programme de traitement de données selon l'une quelconque des revendications 18 à 23, dans lequel l'opération d'attribution d'enregistrement attribue une plage (112) ponctuée par une chaîne de caractères spécifique de la plage sélectionnée par l'opération de sélection à un enregistrement.

25. Programme de traitement de données selon l'une quelconque des revendications 18 à 23, dans lequel l'opération d'attribution d'enregistrement attribue un nombre de lignes prédéterminé dans une plage (112) sélectionnée par l'opération de sélection à un enregistrement.

26. Programme de traitement de données selon l'une quelconque des revendications 18 à 25, comprenant par ailleurs :
une opération de suppression qui supprime des chaînes de caractères au niveau de têtes de lignes quand les chaînes de caractères d'une pluralité de lignes sont sélectionnées par l'opération de sélection et que les chaînes de caractères au niveau des têtes de lignes de la pluralité de lignes sont identiques.

27. Programme de traitement de données selon l'une quelconque des revendications 18 à 26, dans lequel :
l'opération de détermination d'attribut attribue une chaîne de caractères sélectionnée par l'opération de sélection à un enregistrement conformément à un format d'importation défini au préalable.

28. Programme de traitement de données selon la revendication 27, dans lequel le format d'importation contient le type d'attribut et l'attribution d'une composante dans un enregistrement et la quantité de lignes à allouer à un enregistrement.

29. Programme de traitement de données selon la revendication 27 ou 28, comprenant par ailleurs : une opération de définition qui définit le format d'importation ; et une opération de mémorisation de format pour mémoriser un format d'importation défini par l'opération de définition.

30. Programme de traitement de données selon l'une quelconque des revendications 27 à 29, dans lequel le format d'importation contient une chaîne de caractères de ponctuation (302) pour diviser une chaîne de caractères attribuée à un enregistrement en des composantes, et des informations d'attribut pour déterminer l'attribut d'une composante ponctuée par le caractère de ponctuation (302).

31. Programme de traitement de données selon la revendication 30, dans lequel les informations d'attribut se composent d'une chaîne de caractères (301) indiquant un attribut pris en sandwich entre des symboles spécifiques.

32. Programme de traitement de données selon la revendication 31, dans lequel il est indiqué qu'une composante correspondant aux informations d'attribut n'a pas besoin d'être importée quand les informations d'attribut sont composées du symbole spécifique uniquement.

33. Programme de traitement de données selon l'une quelconque des revendications 27 à 32, comprenant par ailleurs :
une opération d'intégration de composantes qui intègre une pluralité de composantes déterminées comme étant un attribut identique par l'opération de détermination d'attribut.

34. Programme de traitement de données selon l'une quelconque des revendications 27 à 33, dans lequel le format d'importation contient un caractère de début (303) indiquant le début d'une plage (112) à importer.
